(19) Europäisches Patentamt

European Patent Office

Office européen des brevets

(11) **EP 2 985 222 B1**

(12) **EUROPEAN PATENT SPECIFICATION**

(45) Date of publication and mention
of the grant of the patent:
**26.02.2020  Bulletin 2020/09**

(51) Int Cl.:
***B64C 27/00*** *(2006.01)*

(21) Application number: **15185754.7**

(22) Date of filing: **07.04.2009**

(54) **HELICOPTER VIBRATION CONTROL SYSTEM AND CIRCULAR FORCE GENERATION SYSTEM FOR CANCELLING VIBRATIONS**

HELIKOPTERVIBRATIONSSTEUERUNGSSYSTEM UND DREHKRAFTERZEUGUNGSSYSTEM ZUR UNTERDRÜCKUNG VON VIBRATIONEN

SYSTÈME DE CONTRÔLE DES VIBRATIONS D'UN HÉLICOPTÈRE ET SYSTÈME DE GÉNÉRATION DE FORCE CIRCULAIRE POUR ANNULER LES VIBRATIONS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.04.2008  US 42980**

(43) Date of publication of application:
**17.02.2016  Bulletin 2016/07**

(62) Document number(s) of the earlier application(s) in accordance with Art. 76 EPC:
**09729974.7 / 2 280 868**

(73) Proprietor: **LORD Corporation**
**Cary, NC 27511 (US)**

(72) Inventors:
• **JOLLY, Mark R**
  **Raleigh, NC 27602 (US)**
• **MEYERS, Andrew D**
  **Apex, NC 27502 (US)**
• **IVERS, Douglas E**
  **Cary, NC 27511 (US)**
• **BADRE-ALAM, Askari**
  **Apex, NC 27502 (US)**
• **ALTIERI, Russell E**
  **Cary, NC 27518 (US)**
• **MELLINGER, Daniel**
  **Philadelphia, PA 19104 (US)**
• **SWANSON, Douglas A**
  **Cary, NC 27519 (US)**

(74) Representative: **Wynne-Jones IP Limited**
**2nd Floor, 5210 Valiant Court**
**Gloucester Business Park**
**Gloucester**
**Gloucestershire GL3 4FE (GB)**

(56) References cited:
**WO-A-2009/055007      GB-A- 2 275 984**
**US-A1- 2007 156 289    US-B1- 6 467 723**

## Description

### Field of the Invention

The invention relates to the field of vibration control systems for actively minimizing vibrations in structures. The invention relates to the field of methods/systems for actively controlling vibrations in vehicles. More particularly the invention relates to the field of controlling vibrations in aircraft vehicles having a nonrotating body and a rotating member, and more particularly the invention relates to helicopter vibration control systems.

### Background

Great Britain Patent No. GB2275984A discloses a device for opposing vibrations produced by a jet engine supported from a wing. The device includes a plurality of eccentric mass co-rotating at the same angular speed; and means modules for individually controlling the angular position of each of the masses. According to the patent, by selectively controlling the angular position of each eccentric mass, the device may generate a desired rotating force vector and a desired oscillatory couple to oppose the propagation of vibration from a dynamically unbalanced rotating rotor (such as the jet engine fan section) through a supporting structure.

Patent Cooperation Treaty Publication No. WO2009055007A2 discloses an aircraft with at least one rotating machine including a power source outputting a plurality of electromagnetic force generator power outputs; an aerostructure including a plurality of distributed active vibration control system sites; at least a first distributed active vibration electromagnetic force generator, including a first distributed electronic control system and a first electromagnetically driven mass, the first force generator fixed to the aerostructure at a first site; at least a second distributed active vibration electromagnetic force generator including a second distributed electronic control system and a second electromagnetically driven mass, the second force generator fixed to the aerostructure at a second site; a plurality of electrical power distribution lines connecting the electromagnetic force generators with the power source with the power outputs outputted to the electromagnetic force generators; a distributed force generator data communications network linking together the at least first and second distributed electronic control systems; wherein the control systems communicate force generator vibration control data through the distributed force generator data communications network independently of the electrical power distribution lines to minimize the troublesome vibrations.

United States Patent Publication No. US2007/0156289A1 discloses a computer programmable system and program product for controlling vibrations is provided. The computer programmable system and program product include first program instructions for actively driving a first imbalance mass concentration rotor and a second imbalance mass concentration rotor at a vibration canceling rotation frequency while controlling the rotational position of the first imbalance mass concentration and the second imbalance mass concentration to produce a rotating net force vector to inhibit periodic vibrations. The computer programmable system and program product include second program instructions to opposingly orient the first imbalance mass concentration relative to the second imbalance mass concentration during a starting stopping rotation speed less than the vibration canceling rotation frequency. The system and product preferably include a fault mode control protocol for controlling a rotation of the rotors during a sensed failure of the rotating assembly vibration control system.

### Summary of the Invention

The invention provides a vehicle vibration control system for controlling troublesome vibrations in a nonrotating vehicle body having a rotating machine member, said vehicle vibration control system comprising: a vehicle vibration control system controller; a rotating machine member sensor, for inputting vehicle rotating machine member data correlating to a relative rotation of said rotating machine member rotating relative to said nonrotating vehicle body into said vehicle vibration control system controller, at least a first nonrotating vehicle body vibration sensor, said at least first nonrotating vehicle body vibration sensor inputting at least first nonrotating vehicle body vibration sensor data correlating to vehicle vibrations into said vehicle vibration control system controller; at least a first nonrotating vehicle body circular force generator, said at least a first nonrotating vehicle body circular force generator for fixedly mounting to said nonrotating vehicle body; wherein said at least first nonrotating vehicle body circular force generator is configured to be controlled by said vehicle vibration control system controller to produce a rotating force with a controllable rotating force magnitude and a controllable rotating force phase; wherein said at least first nonrotating vehicle body circular force generator includes at least a first rotating mass ($mass_{1\_1}$) controllably driven about a first rotating mass axis with a first rotating mass controllable rotating imbalance phase $\Phi_{1\_1}$ and at least a second corotating mass ($mass_{1\_2}$) controllably driven about a second rotating mass axis (with a second rotating mass controllable rotating imbalance phase $\Phi_{1\_2}$; and said controllable rotating force magnitude is configured to be controlled from a minimal force magnitude up to a maximum force magnitude, and with said controllable rotating force phase controlled in reference to said rotating machine member sensor data correlating to said relative rotation of said vehicle rotating machine member rotating relative to said nonrotating vehicle body with said vehicle vibration sensed by said at least first nonrotating vehicle body vibration sensor reduced by said vehicle vibration control system controller; wherein the first rotating mass axis and the second rotating mass axis overlap.

The system can include n nonrotating vehicle body vibration sensors and m nonrotating vehicle body circular force generators wherein n>m.

The rotating force can be controlled to rotate at a harmonic of the rotating machine member rotating speed.

The vehicle vibration control system controller can generate a rotating reference signal from said vehicle rotating machine member sensor data correlating to said relative rotation of said vehicle rotating machine member rotating relative to said nonrotating vehicle body.

The vehicle vibration control system controller can calculate in reference to a rotating reference signal said rotating force with a real part $\alpha$ and an imaginary part $\beta$.

The system can include n nonrotating vehicle body vibration sensors and m nonrotating vehicle body circular force generators, wherein said vehicle vibration control system controller generates a rotating reference signal from said vehicle rotating machine member sensor data correlating to said relative rotation of said vehicle rotating machine member rotating relative to said nonrotating vehicle body, said imbalance phase $\Phi_{1\_1}$ and said imbalance phase $\Phi_{1\_2}$ is controlled in reference to said rotating reference signal, and said $m^{th}$ nonrotating vehicle body circular force generator includes a first rotating mass ($mass_{m\_1}$) controllably driven about a first rotating mass axis with a first rotating mass controllable rotating imbalance phase ($D_{m\_1}$ and a second corotating mass ($mass_{m\_2}$) controllably driven about a second rotating mass axis with a second rotating mass controllable rotating imbalance phase $\Phi_{m-2}$, said imbalance phase $\Phi_{m\_1}$ and said imbalance phase $\Phi_{m\_2}$ controlled in reference to said rotating reference signal.

The first rotating mass ($mass_{1\_1}$) can be driven with a first motor and said second corotating mass ($mass_{1\_2}$) can be driven with a second motor.

The system can comprise a detent linking between said first rotating mass ($mass_{m\_1}$) and said second corotating mass ($mass_{m\_2}$), and a motor for driving said first rotating mass ($mass_{m\_1}$), wherein said first rotating mass ($mass_{m\_1}$) comprises a master rotating mass ($massm\_1$) with a master rotating mass controllable rotating imbalance phase $\Phi_{1\_1}$, and said second corotating mass ($mass_{m\_2}$) comprises a slave corotating mass ($mass_{m\_2}$) with a slave rotating mass controllable rotating imbalance phase $\Phi_{1\_2}$ with said detent controlling said slave rotating mass controllable rotating imbalance phase $\Phi_{1\_2}$ relative to said master rotating mass controllable rotating imbalance phase $\Phi_{1\_1}$.

The system can include n nonrotating vehicle body vibration sensors and m nonrotating vehicle body circular force generators, with m $\geq$ 2, and a second nonrotating vehicle body circular force generator including a first rotating mass ($mass_{2\_1}$) controllably driven about a second circular force generator axis with a first rotating mass controllable rotating imbalance phase $\Phi_{2\_1}$ and a second corotating mass ($mass_{2\_2}$) controllably driven about said second circular force generator axis with a second rotating mass controllable rotating imbalance phase $\Phi_{2\_2}$, said second nonrotating vehicle body circular force generator oriented relative to said first nonrotating vehicle body circular force generator wherein said second circular force generator axis is nonparallel with said first circular force generator axis. Optionally m $\geq$ 3, and the system includes a third nonrotating vehicle body circular force generator including a first rotating mass ($mass_{3\_1}$) controllably driven about a third circular force generator axis with a first rotating mass controllable rotating imbalance phase $\Phi_{3\_1}$ and a second corotating mass ($mass_{3\_2}$) controllably driven about said third circular force generator axis with a second rotating mass controllable rotating imbalance phase $\Phi_{3\_2}$, said third circular force generator axis oriented relative to said second circular force generator axis and said first circular force generator axis.

The system can comprise a nonrotating vehicle body having a rotating machine member, wherein said vehicle nonrotating vehicle body further comprises: a vehicle ceiling and a distal vehicle floor, said distal vehicle floor below said vehicle ceiling, including n nonrotating vehicle body vibration sensors and m nonrotating vehicle body circular force generators, said vehicle vibration control system controller calculates a rotating reference signal from said rotating machine member sensor data correlating to said relative rotation of said rotating machine member rotating relative to said nonrotating vehicle body, said imbalance phase $\Phi_{1\_1}$ and said imbalance phase $\Phi_{1\_2}$ controlled in reference to said rotating reference signal, said first nonrotating vehicle body circular force generator mounted to said nonrotating vehicle body proximate said vehicle ceiling, and said $m^{th}$ nonrotating vehicle body circular force generator including a first rotating mass ($mass_{m\_1}$) controllably driven about a first rotating mass axis with a first rotating mass controllable rotating imbalance phase $\Phi_{m\_1}$ and a second corotating mass ($mass_{m\_2}$) controllably driven about a second rotating mass axis with a second rotating mass controllable rotating imbalance phase $\Phi_{m-2}$, said imbalance phase $\Phi_{m\_1}$ and said imbalance phase $\Phi_{m\_2}$ controlled in reference to said rotating reference signal, said $m^{th}$ nonrotating vehicle body circular force generator mounted to said nonrotating vehicle body proximate said vehicle floor.

The system can comprise a nonrotating vehicle body having a rotating machine member, wherein said vehicle nonrotating vehicle body further comprises: a vehicle transmission for transmitting rotational power to said rotating machine member, said vehicle vibration control system controller calculates a rotating reference signal from said rotating machine member sensor data correlating to said relative rotation of said rotating machine member rotating relative to said nonrotating vehicle body, said imbalance phase $\Phi_{1\_1}$ and said imbalance phase $\Phi_{1\_2}$ controlled in reference to said rotating reference signal, said first nonrotating vehicle body circular force generator mounted to said vehicle transmission.

The circular force generator can include at least a first rotating externally housed cooling fan for cooling said circular force generator.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

**Brief Description of the Drawings**

FIGs. 1A - 1B illustrate a rotary wing aircraft and vibration control system.
FIG. 2 illustrates a controller.
FIG. 3 illustrates vehicle body circular force generators.

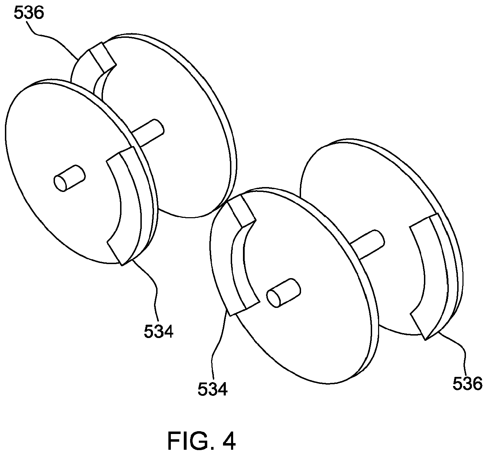

FIG. 4 illustrates vehicle body circular force generators.
FIGs. 5A - 5G illustrate details of a nonrotating vehicle body force generator.
FIGs. 6A - 6F illustrate circular force generator axis orientation.
FIGs. 7A - 7E illustrate a vehicle vibration control system.
FIG. 8 illustrates a vehicle transmission.
FIG. 9 illustrates a further circular force generator.
FIG. 10 illustrates a further vibration control system.
FIGs. 11A - 11G illustrate details of a circular force generator.
FIGs. 12A - 12C illustrate detented master and slave rotating masses.

**Detailed Description of the Preferred Embodiment**

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

Reference will now be made in detail to the present preferred embodiments of the invention, examples of which are illustrated in the accompanying drawings.

In an embodiment the invention includes a rotary wing aircraft vehicle, the vehicle having a nonrotating vehicle structure frame body and a rotating machine member, the vehicle including a vehicle vibration control system, the vehicle vibration control system including a vehicle vibration control system controller. The vehicle includes a vehicle rotating machine member sensor for inputting vehicle rotating machine member data correlating to the relative rotation of the vehicle rotating machine member rotating relative to the nonrotating vehicle body into the vehicle vibration control system controller. The vehicle includes at least a first nonrotating vehicle body vibration sensor, the at least first nonrotating vehicle body vibration sensor inputting at least first nonrotating vehicle body vibration sensor data correlating to vehicle vibrations into the vehicle vibration control system controller. The vehicle includes at least a first nonrotating vehicle body circular force generator, the at least a first nonrotating vehicle body circular force generator fixedly coupled with the nonrotating vehicle body, the at least first nonrotating vehicle body circular force generator controlled by the controller to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body wherein the vehicle vibration sensed by the at least first nonrotating vehicle body vibration sensor is reduced.

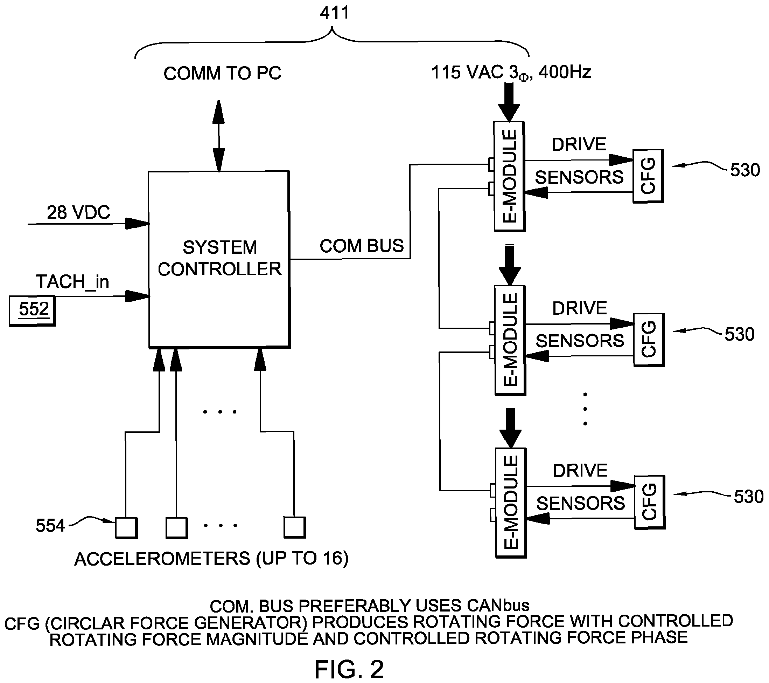

In an embodiment the rotary wing aircraft vehicle 520 includes a nonrotating vehicle body 524, preferably the helicopter structure frame, and a rotating machine member 522, preferably the helicopter rotating rotary wing hub. The rotating vehicle machine member 522 produces vibrations, with vibration disturbances at a vibration frequency, in the nonrotating vehicle body 524. The rotating machine member 522 rotating relative to the vehicle body 524 and producing troublesome vibrations in the vehicle body 524. The vehicle 520 includes a vehicle vibration control system 409, the vehicle vibration control system 409 including a vehicle vibration control system controller 411. Preferably the vehicle vibration control system controller 411 is comprised of at least one computer with inputs and outputs and at least one computer processor, with the vehicle vibration control system controller computer system for reducing vibrations preferably including computer media and utilizing computer programs with computer program instructions. Preferably the controller operates on one or more electronic devices connected and integrated together and communicating with each other. In an embodiment such as illustrated in FIG. 2, controller 411 operates within the system controller electronic devices and with the electronic modules (E-Modules) communicating through the communications bus. The vehicle 520 includes a vehicle rotating machine member sensor 552 for inputting vehicle rotating machine member data correlating to the relative rotation of the vehicle rotating machine member 522 rotating relative to the nonrotating vehicle body 524 into the vehicle vibration control system controller, preferably a tach output from a tachometer sensor 524 with tach inputs inputted into the controller 411. Preferably the vehicle rotating machine member sensor 552 is a reference sensor for generating a persistent signal indicative of the vibration disturbance, and senses a harmonic of the rotating speed of the rotating vehicle machine member 522 producing vibrations in the vehicle.

The vehicle 520 includes at least a first nonrotating vehicle body vibration sensor 554, the at least first nonrotating vehicle body vibration sensor 554 inputting at least first nonrotating vehicle body vibration sensor data correlating to vehicle vibrations into the vehicle vibration control system controller 411, preferably the vibration sensors 554 are accelerometers coupled to the vehicle nonrotating body such that the accelerometers senses the vibrations and output vibrations signals into the vibration controller 411.

The vehicle 520 includes at least a first nonrotating vehicle body circular force generator 530, the at least a first nonrotating vehicle body circular force generator 530 fixedly coupled with the nonrotating vehicle body 524 with the at least first nonrotating vehicle body circular force generator controlled by the controller 411 to produce a rotating force with a controllable rotating force magnitude and a controllable rotating force phase, the controllable rotating force magnitude controlled from a minimal force magnitude up to a maximum force magnitude. Preferably the at least a first nonrotating vehicle body circular force generator 530 is mechanically mounted to the frame structure body 524 of the vehicle 520 wherein the produced rotating force is transferred there into it with the controllable rotating force phase controlled in reference to the vehicle rotating machine member sensor data correlating to the relative rotation of the vehicle rotating machine member rotating relative to the nonrotating vehicle body (tach input) wherein the vehicle vibration sensed by the at least first nonrotating vehicle body vibration sensor is reduced. In preferred embodiments this includes producing 0 magnitude forces with 180° mass separations and maximum force magnitude with 0° mass separation controlled by the controller 411. Vibration is preferably reduced at a frequency correlating to rotating machine member 522, with vibrations preferably reduced at harmonics of the rotating machine member. Preferably methods include controlling harmonic vibrations of the rotating machine member with the generated rotating force emanating from the circular force generator 530, preferably the circular force generator 530 driving rotating moving masses at a harmonic of the vehicle rotating machine member. Preferably the system 409 generates rotating force as compared to linear component force, with the rotating force rotating at a harmonic of the vehicle rotating machine member 522, and preferably the rotating force phase is controlled relative to a vehicle rotating machine member sensor persistent signal harmonic reference tachometer sine wave preferably utilized in the system controller 411 obtained from a sensor 552 input.

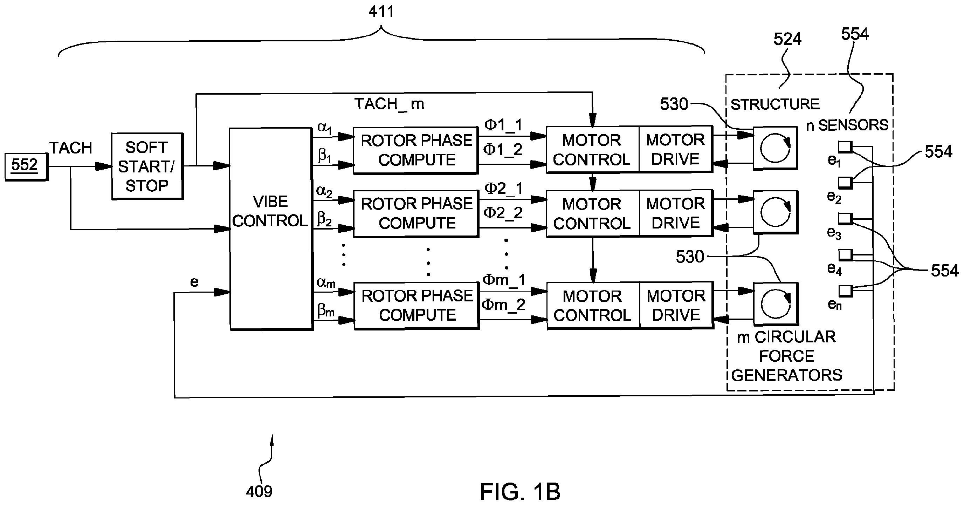

Preferably the vehicle 520 includes n nonrotating vehicle body vibration sensors 554 and m nonrotating vehicle body circular force generators 530 wherein n>m. Preferably the rotating force is controlled to rotate at a vibration disturbance frequency, that is a harmonic of the rotating machine member 522 rotating speed with the system 409 and methods producing circular forces and not specifically or intentionally controlled to produce linear forces. Preferably the methods/systems preferably inhibit and avoid calculating linear forces and outputting such. Preferably the vehicle vibration control system controller 411 generates a rotating reference signal from the vehicle rotating machine member data correlating to the relative rotation of the vehicle rotating machine member rotating relative to the nonrotating vehicle body. Preferably the vehicle vibration control system controller 411 calculates in reference to the rotating reference signal the rotating force with a real part $\alpha$ and an imaginary part $\beta$. Preferably the systems/methods avoid and inhibit calculating linear forces for controlling the vibration, and preferably the vibration control system 409 controller 411 includes a vibe control subsystem (such as Vibe Control - FIG. 1B) which calculates real parts $\alpha_m$ and imaginary parts $\beta_m$ in generating circular force command signals which command/describe desired rotating force vectors, such circular force command signals $\alpha_m \beta_m$ are preferably sent to rotor phase computer subsystem (such as Rotor Phase Compute - FIG. 1B) which in turn preferably computes mass phase signals, which are preferably sent to motor control/motor drive subsystem (such as Motor Control/Motor Drive - FIG. 1B) which generates motor drive signals that drive rotating masses around their circular paths, preferably with motor drive signals that drive the masses to generate the circular forces.

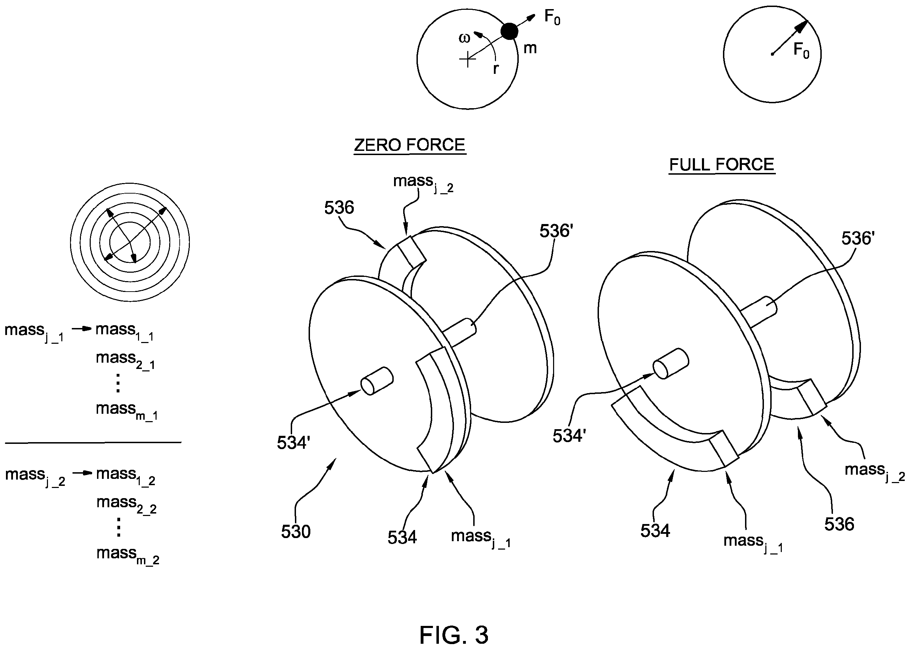

Preferably the vehicle 520 includes at least first nonrotating vehicle body circular force generator 530 including at least a first rotating mass ($mass_{1\_1}$) 534 controllably driven about a first rotating mass axis 534' with a first rotating mass controllable rotating imbalance phase $\Phi_{1\_1}$ and at least a second corotating mass ($mass_{1\_2}$) 536 controllably driven about a second rotating mass axis 536' with a second rotating mass controllable rotating imbalance phase $\Phi_{1\_2}$. As shown in FIG. 3, axes 534' and 536' are overlapping, with the first (($mass_{m\_1}$) and second mass ($mass_{m\_2}$) (with m whole number equal to or greater than one) adjacent each other, preferably with duplicate mass arcs of duplicate arcuate shape and arcuate size oriented about the overlapping axes. Preferably the duplicate mass arcs of duplicate arcuate shape and arcuate size oriented about the overlapping axes adjacent each other, are preferably unnested rotating masses. The rotating mass arc preferably has an outer circumference curvature and an inner circular circumference curvature, and a center of mass. The circular force generator 530 preferably has two of the rotating mass arcs, with each rotating mass arc having a center of mass and a mass line going normal from the center of mass to its rotating mass axis providing a center of mass rotation axis track line, preferably with the first and second rotating mass arcs center of mass rotation axis track lines not crossing or intersecting but parallel, and preferably approximately adjacent.

Preferably the vehicle 520 includes n nonrotating vehicle body vibration sensors 554 and m nonrotating vehicle body circular force generators 530 wherein n>m and (with m whole number equal to or greater than one). Preferably the vehicle vibration control system controller 411 generates a rotating reference signal from the vehicle rotating machine member data correlating to the relative rotation of the vehicle rotating machine member 522 rotating relative to the nonrotating vehicle body 524. Preferably the first nonrotating vehicle body circular force generator 530 includes the first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal. Preferably the $m^{th}$ nonrotating vehicle body circular force generator 530 including a first rotating mass ($mass_{m\_1}$) 534 controllably driven about a first rotating mass axis 534' with a first rotating mass controllable rotating imbalance phase $\Phi_{m\_1}$ and a second corotating mass ($mass_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, preferably the rotating reference signal based on the tach input of the rotating machine rotor head member 522.

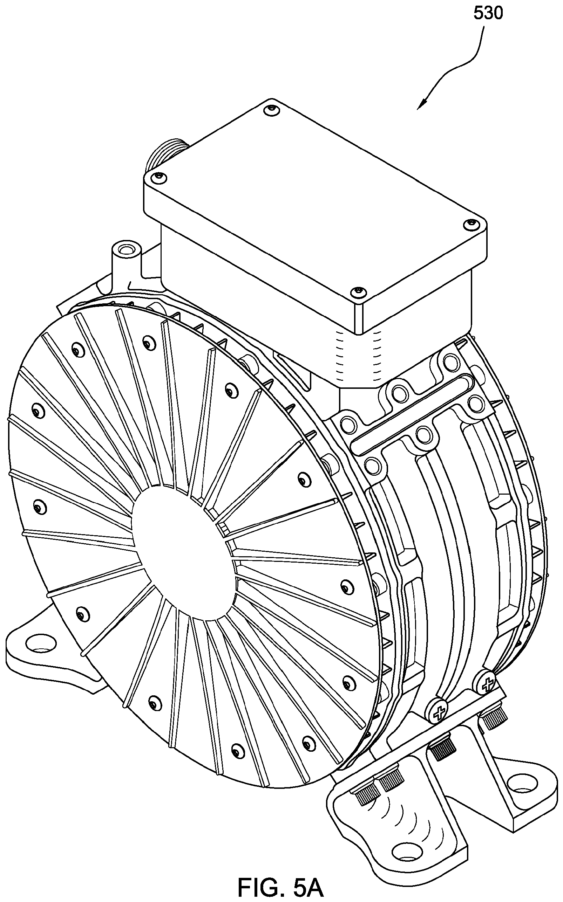

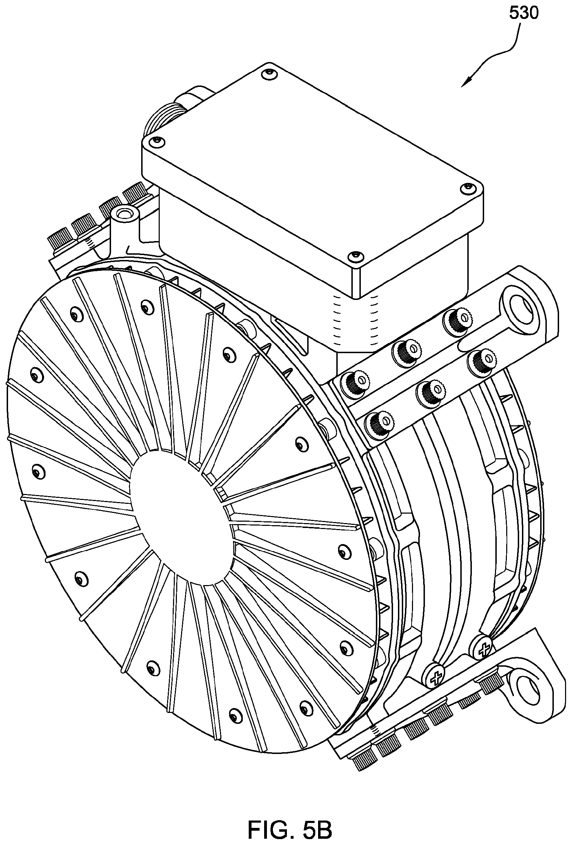

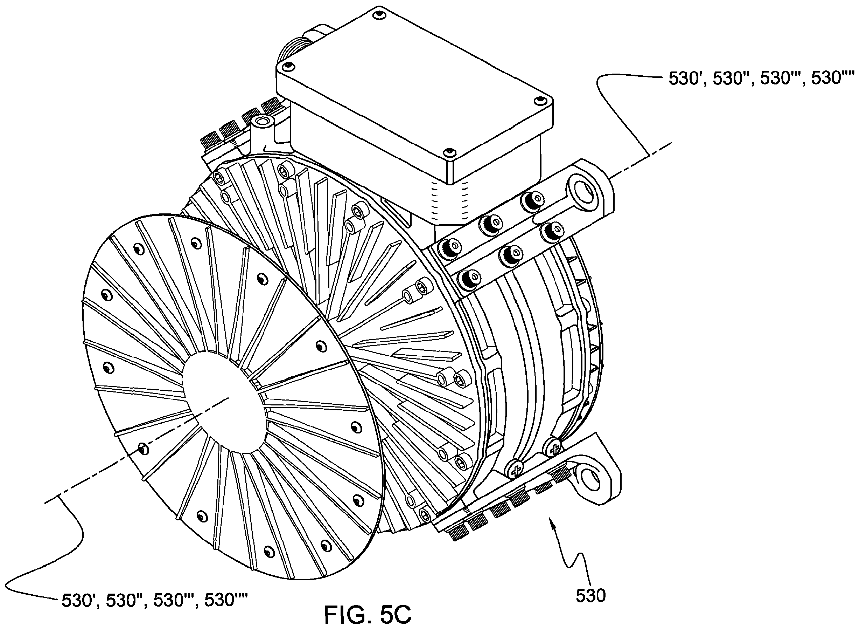

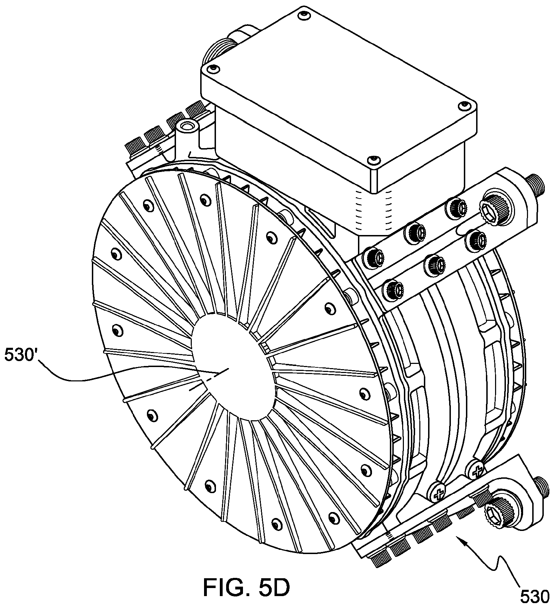

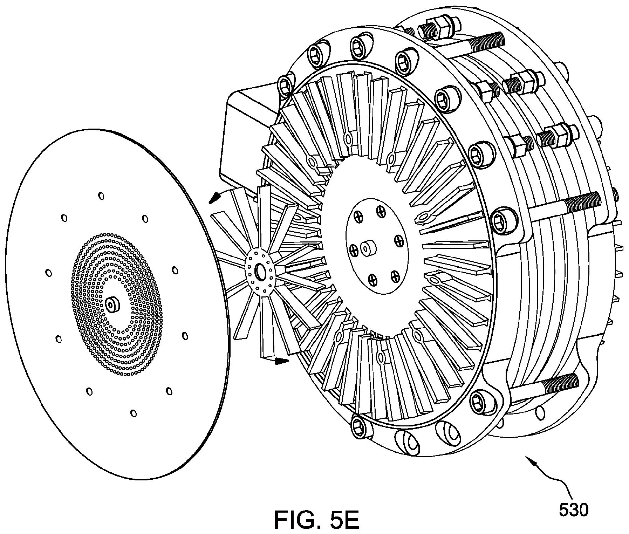

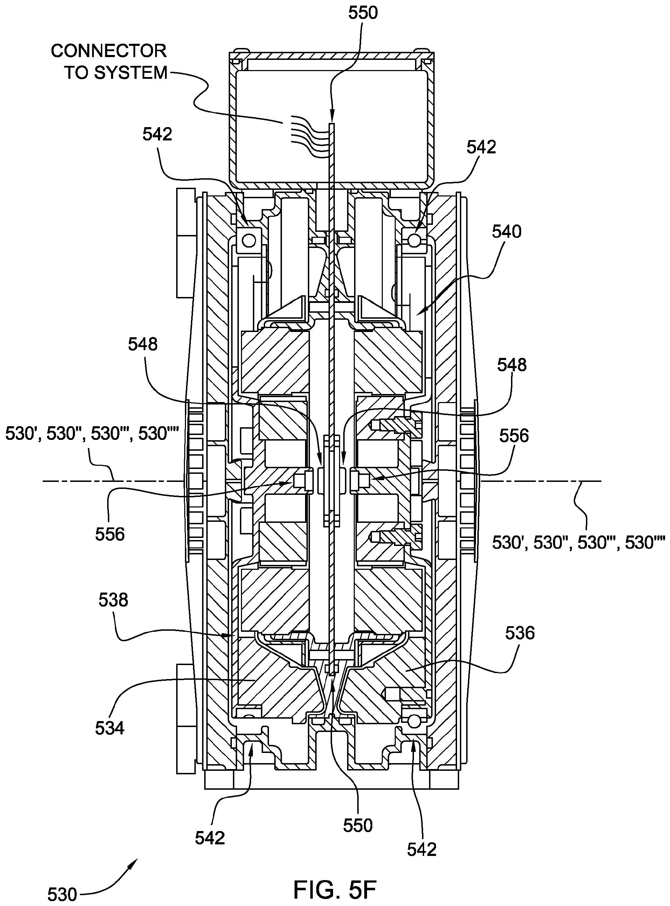

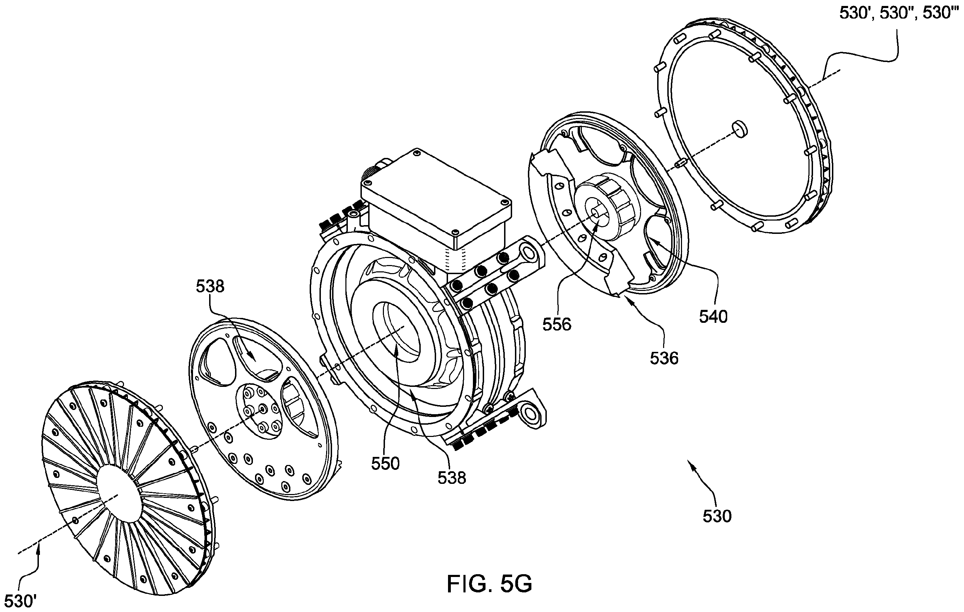

Preferably the first nonrotating vehicle body circular force generator 530 includes a first rotating mass ($mass_{1\_1}$) 534 with a first rotating mass controllable rotating imbalance phase $\Phi_{1\_1}$ and a second corotating mass ($mass_{1\_2}$) 536 with a second rotating mass controllable rotating imbalance phase $\Phi_{1\_2}$. Preferably the first rotating mass ($mass_{1\_1}$) is driven with a first motor and the second corotating mass ($mass_{1\_2}$) is driven with a second motor. As shown in FIG. 5, nonrotating vehicle body circular force generator 530 preferably includes the first rotating mass ($mass_{1\_1}$) 534 is driven with a first motor 538 and the second corotating mass ($mass_{1\_2}$) 536 is driven with a second motor 540.

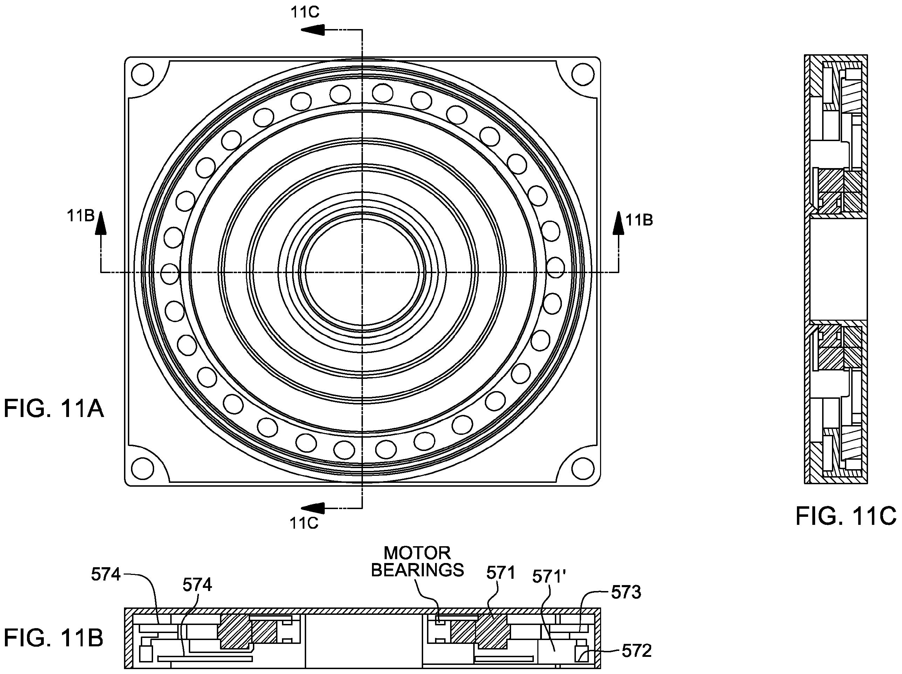

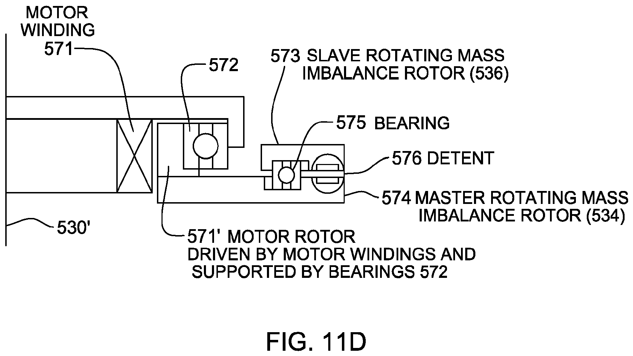

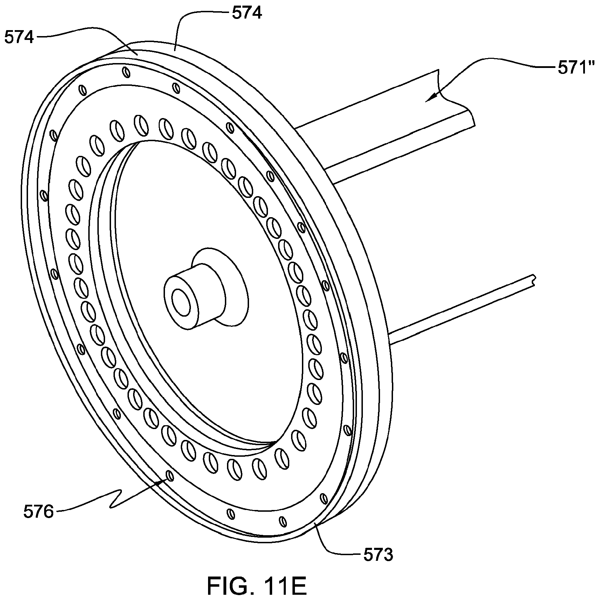

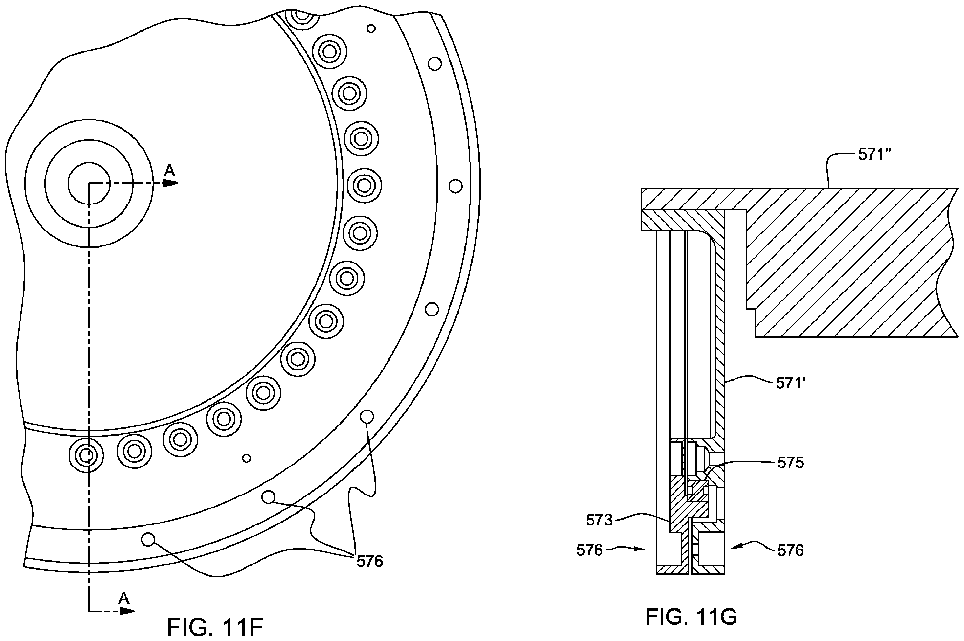

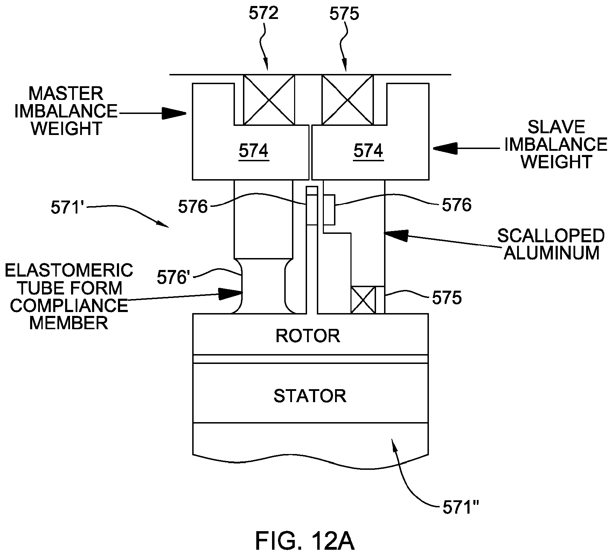

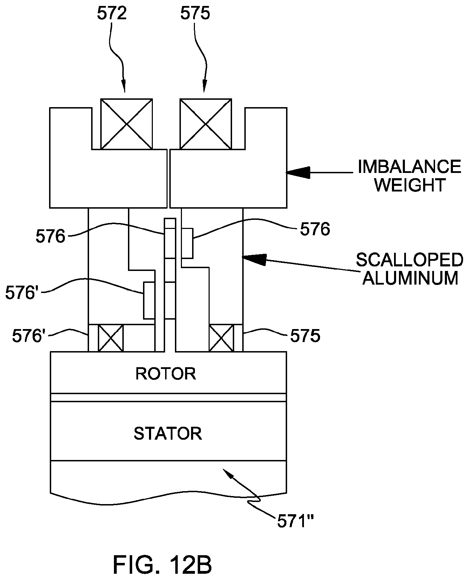

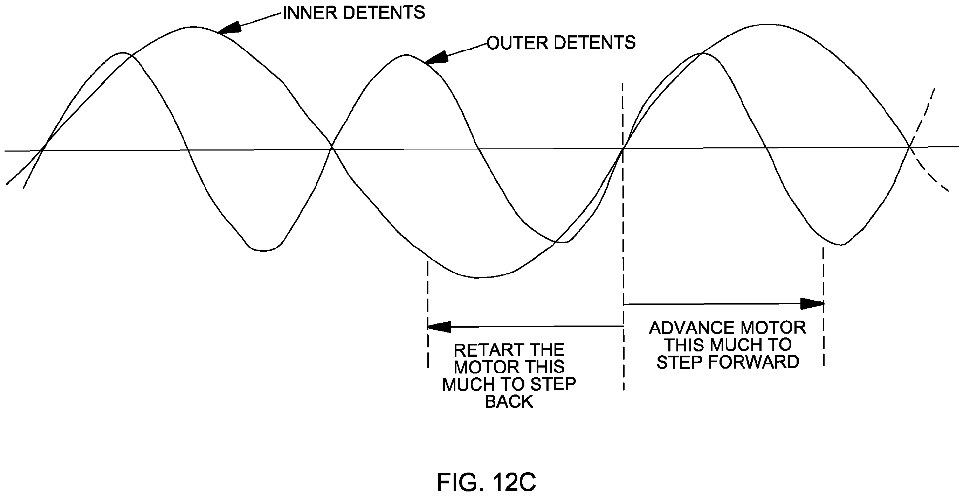

Preferably the first nonrotating vehicle body circular force generator 530 includes a first rotating mass ($mass_{1\_1}$) 534 with a first rotating mass controllable rotating imbalance phase $\Phi_{1\_1}$ and a second corotating mass ($mass_{1\_2}$) 536 with a second rotating mass controllable rotating imbalance phase $\Phi_{1\_2}$, with a detent 576 linking between the first rotating mass ($mass_{m\_1}$) and the second corotating mass ($mass_{m\_2}$), and a single motor for driving the first rotating mass ($mass_{m\_1}$), wherein the first rotating mass ($mass_{m\_1}$) comprises a master rotating mass ($mass_{m\_1}$) with a master rotating mass controllable rotating imbalance phase $\Phi_{1\_1}$, and the second corotating mass ($mass_{m\_2}$) comprises a slave corotating mass ($mass_{m\_2}$) with a slave rotating mass controllable rotating imbalance phase $\Phi_{1\_2}$ with the detent 576 controlling the slave rotating mass controllable rotating imbalance phase $\Phi_{1\_2}$ relative to the master rotating mass controllable rotating imbalance phase $\Phi_{1\_1}$. As illustrated in FIG. 11, preferably one motor 571" with motor windings 571 drives both the master rotating mass 574 and the slave rotating mass 574. The motor windings 571 drive a motor rotor 571' supported by bearings 572 with that motor rotor coupled with the master rotating mass imbalance rotor 574 (first rotating mass 534) with the second slave rotating mass imbalance rotor 573 coupled with the master rotor 574 with bearing 575 and detent 576 wherein the phase between the two rotors can be adjusted with controllably forcing slippage across the detent 576. Preferably the rotors are magnetically detented with a plurality of distributed magnets coupling the two rotors together, preferably with motor torque pulses controllably clocking the relative phases of the imbalance phases to control force magnitude with slipping of the detents 576. In embodiments detents 576 include magnetically detented magnets on magnets detent and magnets on steel. In embodiments the rotors are mechanically detented such as with mechanical ball detent, quill detent, and friction interface detent, preferably with elastomeric detents, preferably with engaging surface effect elastomers. FIG. 12 illustrates further embodiments of detented master and slave rotating masses. As shown in FIG. 12A-B, the master slave rotating mass rotor is preferably compliantly coupled and driven by the motor 571", preferably with a compliance member 576'. Preferably a compliance, preferably a compliance member 576', is provided between the motor and the master rotor imbalance. In preferred embodiments the compliance member 576' is a spring member. As shown in FIG. 12A, the compliance member 576' is an elastomeric spring member, preferably a elastomeric tubeform compliance member. As shown in FIG. 12B, the compliance member 576' is a magnetic detent spring and bearing member, preferably with the magnetic detents with lower step resolution than the above existing detents 576 between the master and slave rotating mass rotors or preferably with the magnetic detents with higher step maximum torque than the above existing detents 576 between the master and slave rotating mass rotors. In additional embodiments the compliance member 576' is a metal spring member, such as a spoke style metal spring, or other flexing metal spring member. In additional embodiments the compliance member 576' is a torsional spring member. Preferably the compliance member 576' is provided between the motor 571" and the master rotating imbalance rotor and then the detent 576 is provided between the compliant master rotating imbalance mass and the detented slave rotor. FIG. 12C show the detent torque versus relative angular displacement for two detents.

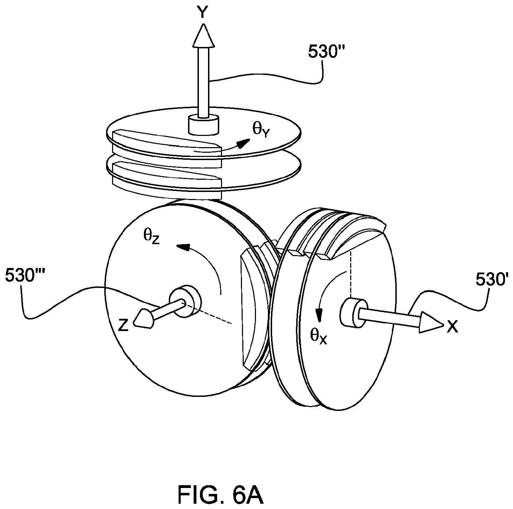

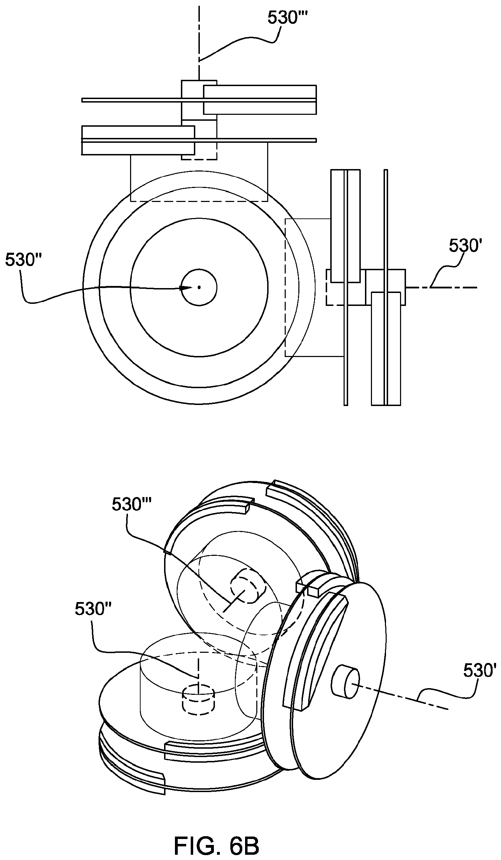

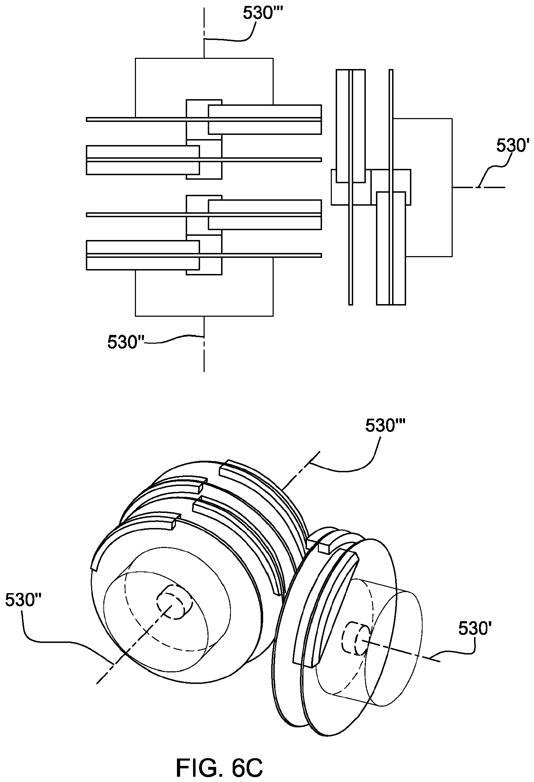

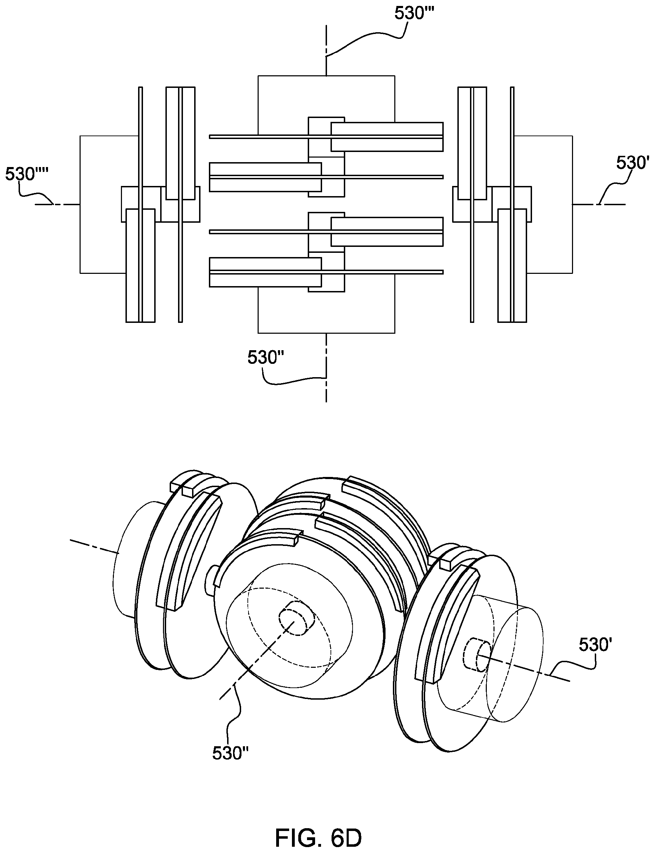

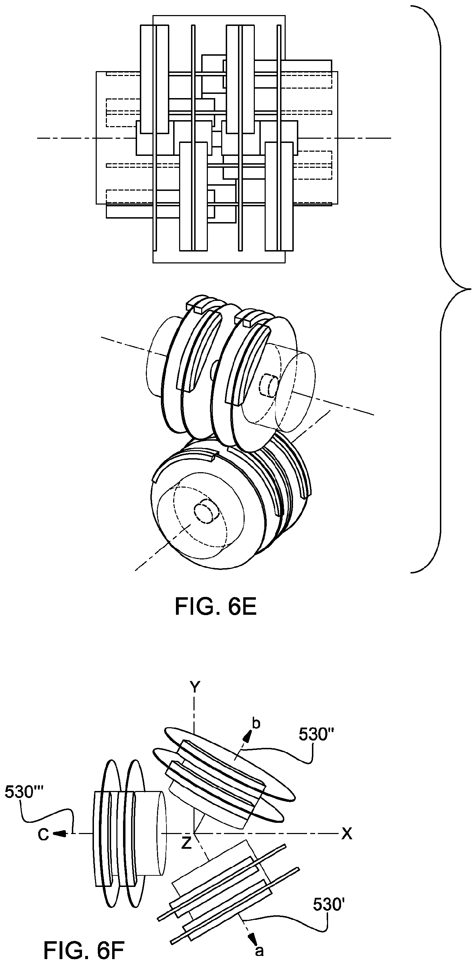

Preferably the vehicle 520 includes n nonrotating vehicle body vibration sensors 554 and m nonrotating vehicle body circular force generators 530, with m ≥ 2 and wherein n>m. Preferably the vehicle vibration control system controller 411 calculates a rotating reference signal from the vehicle rotating machine member data correlating to the relative rotation of the vehicle rotating machine member 522 rotating relative to the nonrotating vehicle body 524, and the first nonrotating vehicle body circular force generator 530 includes a first rotating mass ($mass_{1\_1}$) 534 controllably driven about a first circular force generator axis 530' with a first rotating mass controllable rotating imbalance phase $\Phi_{1\_1}$ and a second corotating mass ($mass_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. The vehicle 520 includes a second nonrotating vehicle body circular force generator 530 including a first rotating mass ($mass_{2\_1}$) 534 controllably driven about a second circular force generator axis 530" with a first rotating mass controllable rotating imbalance phase $\Phi_{2\_1}$ and a second corotating mass ($mass_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, the second nonrotating vehicle body circular force generator 530 oriented relative to the first nonrotating vehicle body circular force generator 530 wherein the second circular force generator axis 530" is nonparallel with the first circular force generator axis 530'. In a preferred embodiment the second nonrotating vehicle body circular force generator 530 oriented relative to the first nonrotating vehicle body circular force generator 530 wherein the second circular force generator axis 530" is oriented orthogonally with the first circular force generator axis 530'. Preferably m ≥ 3, and a third nonrotating vehicle body circular force generator 530 first rotating mass ($mass_{3\_1}$) 534 is controllably driven about a third circular force generator axis 530''' with a first rotating mass controllable rotating imbalance phase $\Phi_{3\_1}$ and a second corotating mass ($mass_{3\_2}$) 536 is controllably driven about the third circular force generator axis 530''' with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis 530" and the first circular force generator axis 530'. In preferred embodiments the axis 530', 530", 530''' are nonparallel, and more preferably are oriented orthogonally. In embodiments at least two circular force generator axes are parallel, and preferably at least one nonparallel, preferably orthogonal. FIG. 6 illustrate embodiments of circular force generator axis 530',530", 530''',530'''' orientation. In embodiments preferably the three axis 530', 530", 530''' form a three-dimensional basis whereby controllable force components are created in three dimensions.

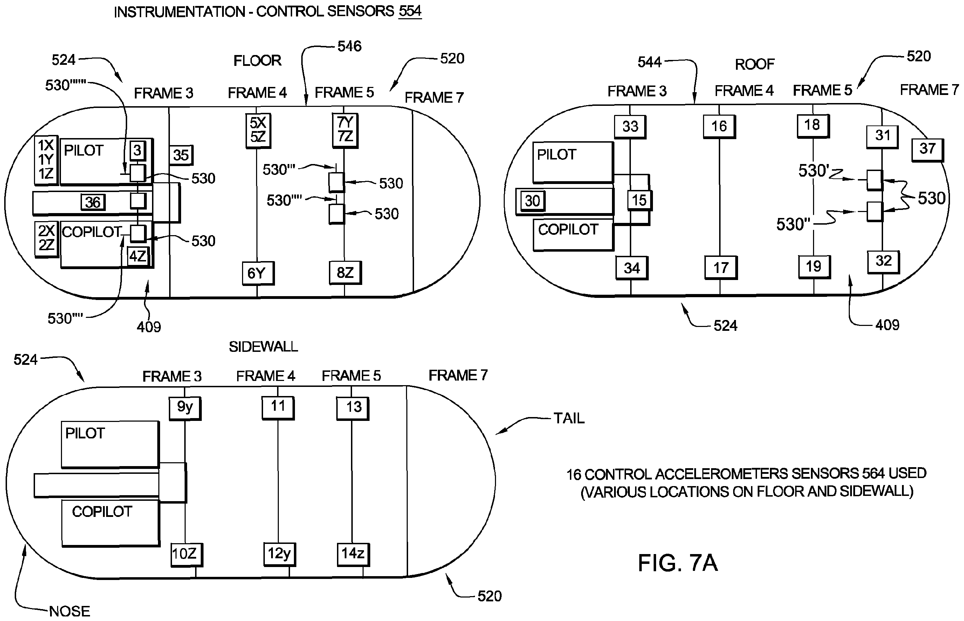

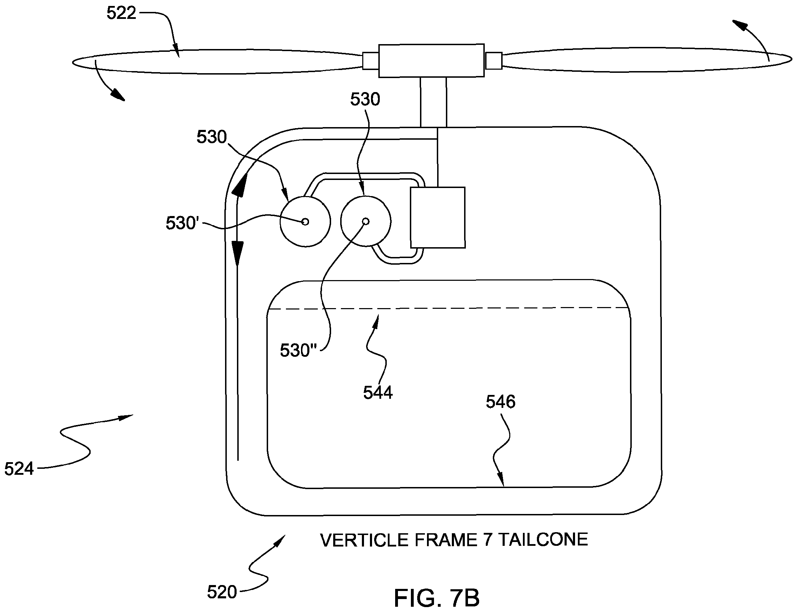

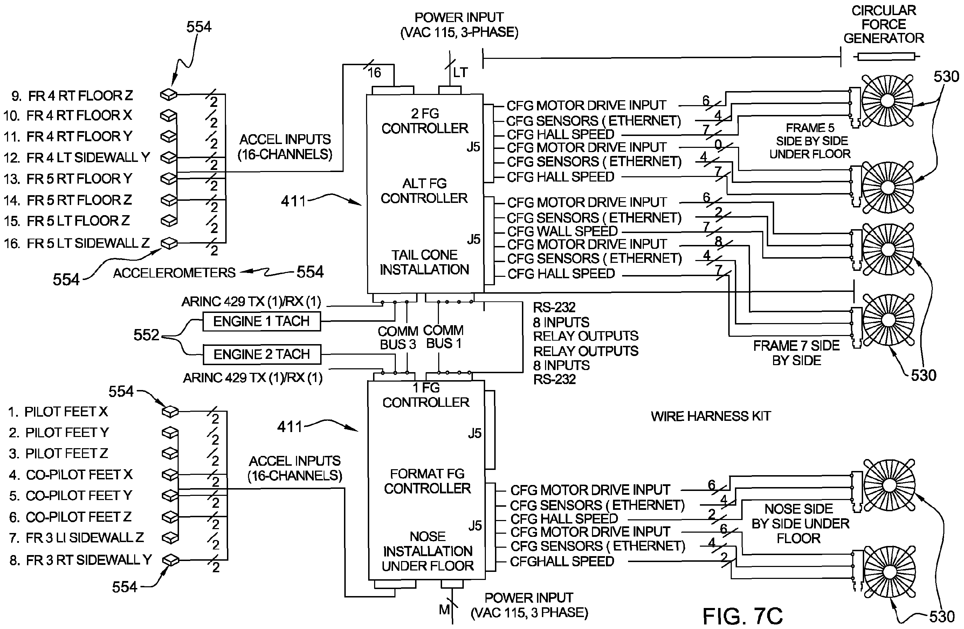

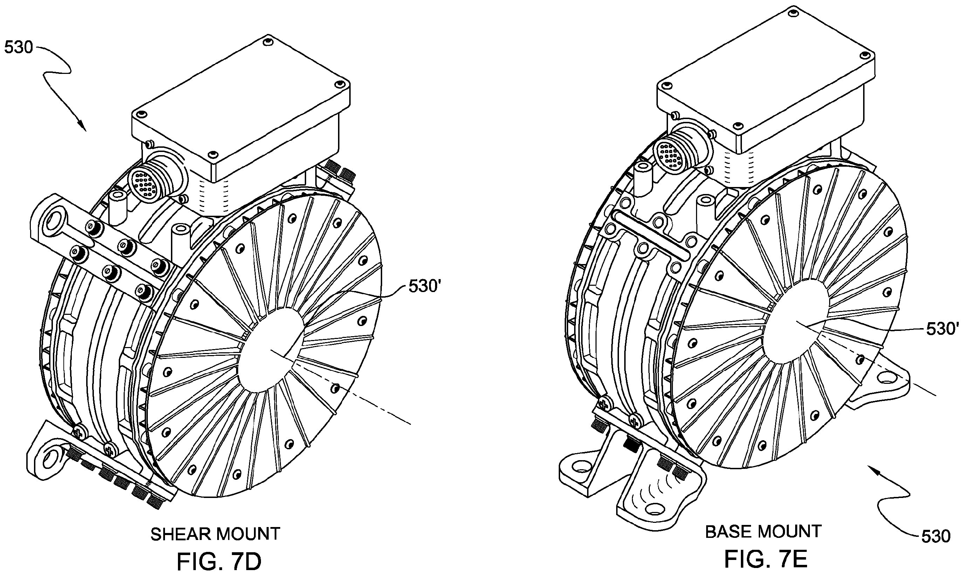

Preferably the vehicle 520 is a rotary wing aircraft with a vehicle ceiling and a vehicle floor. Preferably the vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. Preferably the vehicle 520 includes n nonrotating vehicle body vibration sensors 554 and m nonrotating vehicle body circular force generators 530 with n>m. The vehicle vibration control system controller 411 calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator mounted to the vehicle body 524 proximate the vehicle ceiling 544. The vehicle with nonrotating vehicle body circular force generator 530 including a first rotating mass ($mass_{m\_1}$) 534 controllably driven about a first rotating mass axis 534' with a first rotating mass controllable rotating imbalance phase $\Phi_{m\_1}$ and a second corotating mass ($mass_{m\_2}$) 536 controllably driven about a second rotating mass axis 536' with a second rotating mass controllable rotating imbalance phase $\Phi_{m-2}$, the imbalance phase $\Phi_{m\_1}$ and the imbalance phase $\Phi_{m\_2}$ controlled in reference to the rotating reference signal, the $m^{th}$ nonrotating vehicle body circular force generator mounted to the vehicle body 524 proximate the vehicle floor 546. Preferably a plurality of circular force generators 530 are mounted to the vehicle body frame 524 proximate the floor 546, and preferably under the floor 546, and preferably proximate the vehicle nose, and preferably proximate the vehicle tail. Preferably a plurality of circular force generators 530 are mounted to the vehicle body frame 524 proximate the ceiling 544, and preferably above the ceiling 544, preferably proximate the vehicle tail, preferably mounted to a vehicle tailcone frame. FIG. 7 illustrates a vehicle vibration control system 409 with two force generators 530 mounted to the tailcone frame 7 proximate the ceiling 544 of a helicopter 520 and with two circular force generators 530 mounted under the floor 546 in the nose of the helicopter below the pilot and copilot area and with two circular force generators 530 mounted under the floor 546 to the helicopter frame 5. Preferably the two circular force generators 530 are mounted to the frame as shown in FIG. 7B with shear mounts as shown in FIG. 7D. In an embodiment the two circular force generators 530 in the nose area are mounted under the floor with base mounts as shown in FIG. 7E. In an embodiment such as illustrated in FIG. 7C, preferably a first forward controller 411 (1 FG Controller) controls the two circular force generators 530 which are mounted under the floor in the forward of the vehicle and a second aft controller 411 (2 FG Controller) controls the four circular force generators 530 mounted proximate the aft of the vehicle.

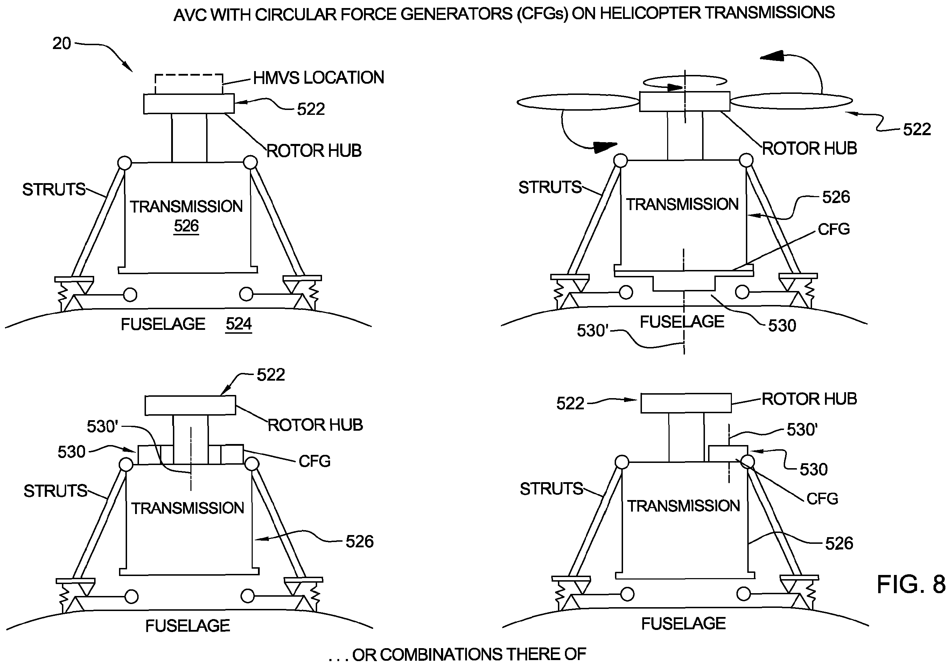

Preferably the vehicle 520 includes a vehicle transmission 526 for transmitting rotational power to the rotating machine member 522. Preferably vehicle engine energy force is transmitted through the transmission 526 to the vehicle motive force propeller helicopter rotor to move it and in turn move the vehicle, preferably with the transmission connected to rotor and transmitting rotating force to the rotor so the rotor turns at the relative rotation rate to the vehicle nonrotating body. The vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass ($mass_{1\_1}$) 534 controllably driven about a first rotating mass axis 534' with a first rotating mass controllable rotating imbalance phase $\Phi_{1\_1}$ and a second corotating mass ($mass_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted to the vehicle transmission 526. In an embodiment a plurality of nonrotating vehicle body circular force generators 530 are mounted to the transmission 526, and preferably the transmission is above the floor 546 and ceiling 544. FIG. 8 illustrates embodiments with nonrotating vehicle body circular force generators 530 mounted to the vehicle transmissions 526, preferably with the circular force generator axis 530' oriented relative to the rotation axis of the rotating machine member 522, most preferably with the circular force generator axis 530' oriented parallel with the rotating machine member rotor hub axis of rotation.

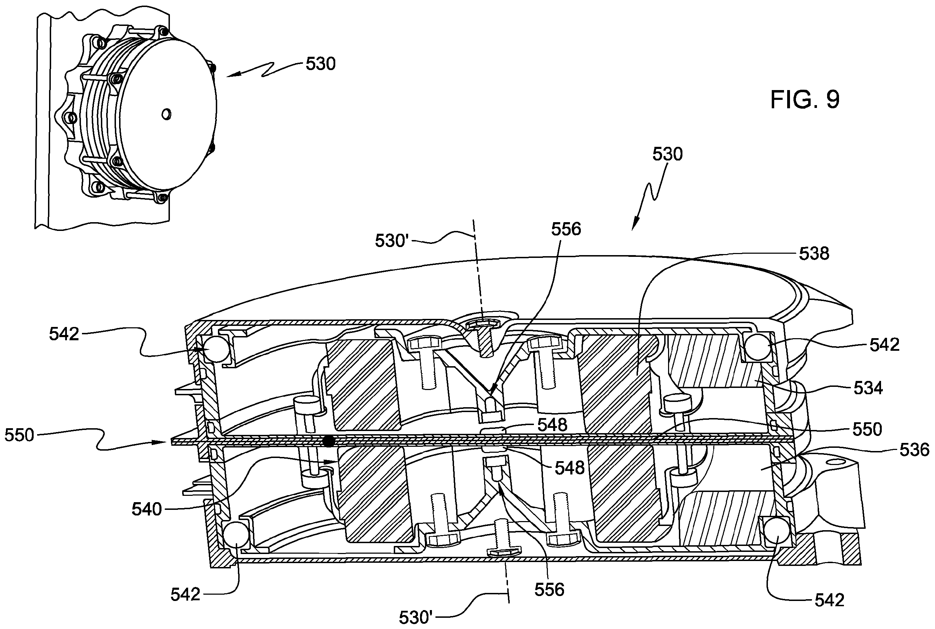

FIG. 5 illustrates preferred embodiments of a nonrotating vehicle body circular force generator 530 including first rotating mass ($mass_{1\_1}$) 534 controllably driven about a first rotating mass axis 534' colined with circular force generator axis 530' rotated by motor 538 (with the nonrotating motor winding preferably between the rotating motor rotor and the rotating mass 534) with first rotating mass controllable rotating imbalance phase $\Phi_{1\_1}$ and a second corotating mass ($mass_{1\_2}$) 536 controllably driven about a second rotating mass axis 536' colined with circular force generator axis 530' rotated by motor 540 (with the nonrotating motor winding preferably between the rotating motor rotor and the rotating mass 536) with first rotating mass controllable rotating imbalance phase $\Phi_{1\_2}$. Preferably a nonrotating vehicle body circular force generator circuit board 550 is positioned between the first rotating mass ($mass_{1\_1}$) 534 and the second corotating mass ($mass_{1\_2}$) 536, preferably a substantially planar is disposed and aligned between the rotating masses and motors, preferably with the circuit board comprised of a sealed circuit board with a sealed exterior overcoating, preferably with the circuit board plane oriented substantially normal to the circular force generator axis 530' with the board preferably equal distances between the first rotating mass ($mass_{1\_1}$) 534 and the second corotating mass ($mass_{1\_2}$) 536. Preferably the circular force generator circuit board 550 extends with an electric lead end into an electronic housing, with the electric lead end connecting the circuit board with at least a first system connector with the outside and the controller 411 and the system 409. Preferably the circuit board includes wiring paths to the motor windings and to first and second rotating mass sensors 548 mounted on the circuit board 550. The first and second rotating mass sensors 548 mounted on the circuit board monitor the rotational position of the rotating mass sensor target 556 on the rotor being driven by the motors 538, 540 such that the controller 411 knows the rotational phase position of the rotating masses 534, 536, in preferred embodiments the first and second rotating mass sensors 548 are comprised of Hall sensor integrated sensor chips for sensing the rotation of a magnetic rotating mass sensor target 556 to provide out through the circuit board to the system controller the rotational position of the rotating mass. In an embodiment the rotating moving mass electronic noncontacting magnetic sensor 548 preferably comprises an integrated circuit semiconductor sensor chip which outputs through the circuit board 550 into the system 409 and controller 411 the rotational angle phase position of the rotating moving mass that the sensor target 556 is coupled with that the motor driven by the controller is driving. In a preferred embodiment the electronic noncontacting magnetic sensor integrated circuit semiconductor sensor chip has at least two dies, preferably the at least two dies are ASICs (Application Specific Integrated Circuits), in a preferred embodiment the at least two dies are side by side dies in the integrated circuit semiconductor sensor chip, in a preferred embodiment the at least two dies are vertically stacked dies in the integrated circuit semiconductor sensor chip. In a preferred embodiment the integrated circuit semiconductor sensor chip ASIC die include a magnetoresistive material, preferably with electrical resistance changes in the presence of the magnetic target magnetic field of target 556, preferably with magnetoresistive elements arranged in a Wheatstone bridge. In a preferred embodiment the integrated circuit semiconductor sensor chip ASIC die include a Hall Effect element, preferably a plurality of oriented Hall Effect elements, preferably silicon semiconductor Hall effect elements which detect the magnetic target magnetic field of target 556. The first electronic noncontacting magnetic sensor 548 sensor plane is integrated substantially normal to the circular force generator axis 530'. The second electronic noncontacting magnetic sensor 548 second sensor plane is integrated substantially normal to the circular force generator axis 530'. Preferably the motor driven rotor includes a fan magnetic coupling drive for driving air cooling fans, preferably with the magnetic coupling drive provided with a magnetic coupling drive ratio to drive the fan at a predetermined fan speed, preferably such as a 4/rev to provide forced air cooling of the force generator 530. FIG. 9 illustrates a further embodiment of a circular force generator axis 530' with the circuit board 550 oriented between the motor driven imbalance masses 534 and 536 with circuit board mounted axis oriented sensor plane chips 548 tracking the rotational position of the motor driven imbalance masses 534 and 536.

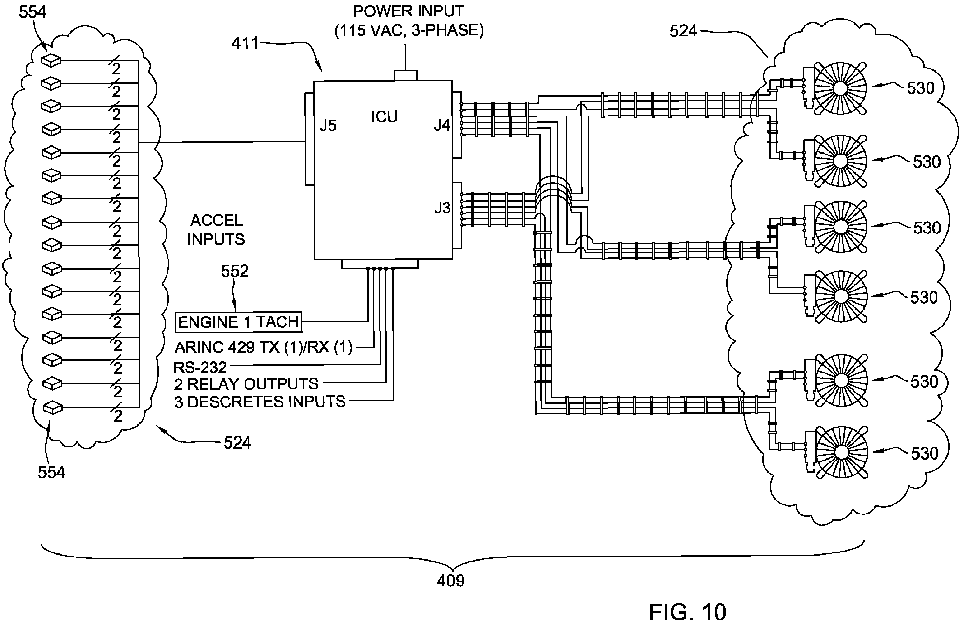

FIG. 10 illustrates a further vibration control system with a block diagram with six circular force generators 530 controlled by a controller 411 with a plurality of accelerometer nonrotating body vibration sensors 554 and an engine tachometer input sensor 552 for the rotating machine member sensor for inputting vehicle rotating machine member data correlating to the relative rotation of the vehicle rotating machine member rotating relative to the nonrotating vehicle body into the vehicle vibration control system controller. The vehicle vibration control system controller 411 controls the rotation of the corotating masses rotating about circular force generator axes (530', 530", ..., 530"'") to create the controllable rotating forces which rotationally emanate out from the nonrotating vehicle body circular force generators 530 to reduces the vehicle vibrations sensed by the nonrotating body vibration sensors 554.

In embodiments the vehicle 520 is a helicopter with the vehicle rotating machine member 522 the helicopter rotating rotary wing hub above the nonrotating vehicle body helicopter fuselage frame below, and the helicopter rotating rotary wing hub includes hub mounted vibration control system 20 with at least a first hub mounted motor driven hub mass and at least a second hub mounted motor driven hub mass housed within a hub housing 30, with the mounted vibration control system 20 at least a first hub mounted motor driven hub mass and at least a second hub mounted motor driven hub mass driven to rotate relative to the rotary wing hub while the system 409 generates rotating forces in the body 524 with the circular force generators 530.

Preferably the circular force generator 530 includes at least a first rotating externally housed cooling fan having a rotation motion for cooling said circular force generator, said cooling fan rotation motion linked with the rotation of said rotating force. Preferably the circular force generator 530 includes at least a first rotating externally housed cooling fan having a rotation motion for cooling the circular force generator 530, the cooling fan rotation motion linked with a rotation of said first rotating mass ($mass_{1\_1}$) or said second corotating mass ($mass_{1\_2}$). Preferably the circular force generator 530 includes a magnetically coupled forced air cooling fan magnetically coupled to the rotation of the mass rotor within the generator housing such that no external power is needed to rotate the fan, preferably with a plurality of spaced magnets providing a rotation coupling to power the fan rotation.

In an embodiment the invention includes a vehicle vibration control system for controlling troublesome vibrations in a nonrotating vehicle body having a rotating machine member. The vehicle vibration control system including a vehicle vibration control system controller. The vehicle vibration control system including a rotating machine member sensor, for inputting vehicle rotating machine member data correlating to a relative rotation of the rotating machine member rotating relative to the nonrotating body into the vehicle vibration control system controller. The vehicle vibration control system including at least a first nonrotating vehicle body vibration sensor, the at least first nonrotating vehicle body vibration sensor inputting at least first nonrotating vehicle body vibration sensor data correlating to vehicle vibrations into the vehicle vibration control system controller. The vehicle vibration control system including at least a first nonrotating vehicle body circular force generator, the at least a first nonrotating vehicle body circular force generator for fixedly mounting to the nonrotating vehicle body wherein the at least first nonrotating vehicle body circular force generator is controlled by the controller to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body with the vehicle vibration sensed by the at least first nonrotating vehicle body vibration sensor reduced by the controller.

The vehicle vibration control system 409 includes a rotary wing aircraft vehicle vibration control system for controlling troublesome vibrations in a nonrotating vehicle body 524 having a rotating machine member 522, preferably the aircraft vehicle structure frame. Preferably the rotating vehicle machine member rotating component 522 producing vibrations and the vibration disturbance at a vibration frequency in the nonrotating vehicle body 524 is preferably the aircraft rotating rotary wing hub. The vehicle vibration control system 409 includes a vehicle vibration control system controller 411 with a vehicle vibration control system processor, with a computer processor with inputs and outputs, and with the control system preferably comprised of multiple connected subsystems. The system includes a vehicle rotating machine member sensor 552, for inputting vehicle rotating machine member data correlating to a relative rotation of the vehicle rotating machine member rotating relative to the nonrotating vehicle body (tach input) into the vehicle vibration control system controller. Preferably the rotating machine member sensor 552 is a reference sensor for generating a persistent signal indicative of the vibration disturbance, and preferably senses a harmonic of the rotating speed of the rotating vehicle machine member 522 producing vibrations, and in preferred embodiments is a tachometer sensor providing a tach input. The system includes at least a first nonrotating vehicle body vibration sensor 554, the at least first nonrotating vehicle body vibration sensor inputting at least first nonrotating vehicle body vibration sensor data correlating to vehicle vibrations into the vehicle vibration control system controller, preferably with the system having a plurality of vibration sensors 554 distributed throughout the body 524, and in preferred embodiments the sensors 554 are accelerometers providing accel inputs. The system includes at least a first nonrotating vehicle body circular force generator 530, the at least a first nonrotating vehicle body circular force generator 530 for fixedly mounting to the nonrotating vehicle body 524 wherein the at least first nonrotating vehicle body circular force generator 530 is controlled by the controller 411 to produce a rotating force with a controllable rotating force magnitude and a controllable rotating force phase, the controllable rotating force magnitude controlled from a minimal force magnitude up to a maximum force magnitude, (preferably 0 magnitude force when masses have a 180° separation opposed position) (preferably maximum force magnitude when masses have a 0° separation position), and with the controllable rotating force phase controlled in reference to the vehicle rotating machine member sensor data correlating to the relative rotation of the vehicle rotating machine member rotating relative to the nonrotating vehicle body (preferably in reference to the tach input) with the vehicle vibration sensed by the at least first nonrotating vehicle body vibration sensor reduced by the controller. Preferably the system includes a plurality of nonrotating vehicle body circular force generators 530 controlled by the controller 411 to produce a plurality of rotating forces with the vibration preferably reduced at a frequency correlating to rotating machine member 522, with troublesome vibrations in the body 524 preferably reduced at harmonics of rotating machine member 522, preferably with the method and system controlling harmonic vibrations of the rotating machine member 522 with the generated rotating forces emanating from the circular force generators 530, preferably with the circular force generators driven rotating moving masses 534 and 536 rotated at a harmonic of the vehicle rotating machine member 522. Preferably the system includes n nonrotating vehicle body vibration sensors 554 and m nonrotating vehicle body circular force generators 530 wherein n>m. Preferably wherein the rotating forces generates are controlled by the controller 411 to rotate at a harmonic of the rotating machine member 522 rotating speed, preferably with the system/method producing circular forces and not calculating for or intentionally producing linear forces, with the method/system preferably inhibiting and avoiding calculating linear forces and outputting such.

Preferably the vehicle vibration control system controller generates a rotating reference signal from the vehicle rotating machine member data correlating to the relative rotation of the vehicle rotating machine member rotating relative to the nonrotating vehicle body. Preferably the vehicle vibration control system controller 411 calculates in reference to a rotating reference signal the rotating force to be generated with a real part $\alpha$ and an imaginary part $\beta$. Preferably the vibe control subsystem calculates real parts $\alpha_m$ and imaginary parts $\beta_m$ in generating circular force command signals which command/describe desired rotating force vectors, such circular force command signals $\alpha_m \beta_m$ are preferably sent to the rotor phase compute subsystem which in turn preferably computes mass phase signals, which are preferably sent to the motor control/motor drive subsystem which generates motor drive signals that drive the masses around their rotating circular paths, preferably motor drive signals that drive the masses to generate the circular forces preferably motor drive signals for motors 538, 540 to drive the masses 534, 536.

Preferably the at least first nonrotating vehicle body circular force generator 530 including at least a first rotating mass(mass$_{1\_1}$) 534 controllably driven about a first rotating mass axis 534' with a first rotating mass controllable rotating imbalance phase $\Phi_{1\_1}$ and at least a second corotating mass (mass$_{1\_2}$) 536 controllably driven about a second rotating mass axis 536' with a second rotating mass controllable rotating imbalance phase $\Phi_{1\_2}$, wherein the axes are overlapping, with masses adjacent each other, preferably duplicate mass arcs of duplicate arcuate shape and arcuate size oriented about the overlapping axes. Preferably the system includes n nonrotating vehicle body vibration sensors 554 and m nonrotating vehicle body circular force generators 530 with n>m, the vehicle vibration control system controller generating a rotating reference signal from the vehicle rotating machine member data correlating to the relative rotation of the vehicle rotating machine member 522 rotating relative to the nonrotating vehicle body 524, and the first nonrotating vehicle body circular force generator 530 includes a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal. Preferably the m$^{th}$ nonrotating vehicle body circular force generator 530 includes a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m-2}$, the imbalance phase $\Phi_{m\_1}$ and the imbalance phase $\Phi_{m\_2}$ controlled in reference to the rotating reference signal.

Preferably the first nonrotating vehicle body circular force generator 530 includes a first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$. Preferably the first rotating mass (mass$_{1\_1}$) 534 is driven with a first motor 538 and the second corotating mass (mass$_{1\_2}$) is driven with a second motor 540.

Preferably the first nonrotating vehicle body circular force generator 530 includes a first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$ with a detent 576 linking between the first rotating mass (mass$_{m\_1}$) and the second corotating mass (mass$_{m\_2}$), and a single motor for driving the first rotating mass (mass$_{m\_1}$), wherein the first rotating mass (mass$_{m\_1}$) comprises a master rotating mass (mass$_{m\_1}$) with a master rotating mass controllable rotating imbalance phase $\Phi_{1\_1}$, and the second corotating mass (mass$_{m\_2}$) comprises a slave corotating mass (mass$_{m\_2}$) with a slave rotating mass controllable rotating imbalance phase $\Phi_{1\_2}$ with the detent controlling the slave rotating mass controllable rotating imbalance phase $\Phi_{1\_2}$ relative to the master rotating mass controllable rotating imbalance phase $\Phi_{1\_1}$.

Preferably the system includes n nonrotating vehicle body vibration sensors 554 and m nonrotating vehicle body circular force generators 530, with m $\geq$ 2 and n>m, and preferably the vehicle vibration control system controller calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass (mass$_{1\_1}$) 534 controllably driven about a first circular force generator axis 530' with a first rotating mass controllable rotating imbalance phase $\Phi_{1\_1}$ and a second corotating mass (mass$_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. The system includes a second nonrotating vehicle body circular force generator 530 including a first rotating mass (mass$_{2\_1}$) 534 controllably driven about a second circular force generator axis 530" with a first rotating mass controllable rotating imbalance phase $\Phi_{2\_1}$ and a second corotating mass (mass$_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, with the second nonrotating vehicle body circular force generator 530 oriented relative to the first nonrotating vehicle body circular force generator 530 wherein the second circular force generator axis 530" is nonparallel with the first circular force generator axis 530'. In preferred embodiments the axes 530' and 530" are oriented orthogonally. Preferably m $\geq$ 3, and a third nonrotating vehicle body circular force generator 530 including a first rotating mass (mass$_{3\_1}$) 534 controllably driven about a third circular force generator axis 530'" with a first rotating mass controllable rotating imbalance phase $\Phi_{3\_1}$ and a second corotating mass (mass$_{3\_2}$) 536 controllably driven about the third circular force generator axis 530'" with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis and the first circular force generator axis.

Preferably the system provides for the placement of nonrotating vehicle body circular force generators 530 proximate the vehicle ceiling and floor. Preferably the vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. Preferably the system includes n nonrotating vehicle body vibration sensors 554 and m nonrotating vehicle body circular force generators 530 with n>m. The vehicle vibration control system controller 411 calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 preferably provided for mounting to the vehicle body 524 proximate the vehicle ceiling 544. The vehicle m$^{\text{th}}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m-2}$, the imbalance phase $\Phi_{m\_1}$ and the imbalance phase $\Phi_{m\_2}$ controlled in reference to the rotating reference signal, the m$^{\text{th}}$ nonrotating vehicle body circular force generator 530 preferably provided for mounting to the vehicle body 524 proximate the vehicle floor 546. Preferably a plurality of circular force generators 530 are provided for mounting to the vehicle body frame 524 proximate the floor 546, and preferably under the floor 546, and preferably proximate the vehicle nose, and preferably proximate the vehicle tail. Preferably a plurality of circular force generators 530 are preferably provided for mounting to the vehicle body frame 524 proximate the ceiling 544, and preferably above the ceiling 544, preferably proximate the vehicle tail, preferably to a vehicle tailcone frame.

Preferably the system includes controlling vehicle transmission 526 vibrations. Preferably the vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 mounted to the vehicle transmission 526. In an embodiment a plurality of nonrotating vehicle body circular force generators 530 are mounted to the transmission 526, and preferably the transmission is above the floor 546 and ceiling 544. Preferably the nonrotating vehicle body circular force generators 530 are mounted to the vehicle transmissions 526, preferably with the circular force generator axis 530' oriented relative to the rotation axis of the rotating machine member 522, most preferably with the circular force generator axis 530' oriented parallel with the rotating machine member rotor hub axis of rotation.

In an embodiment the invention includes a method of controlling helicopter vibrations. The method includes providing a nonrotating helicopter body below a rotating helicopter rotor member. The method includes providing a vibration control system controller. The method includes providing a rotating helicopter rotor member sensor for inputting rotating member data correlating to a relative rotation of the rotating member rotating relative to the nonrotating body into the vibration control system controller. The method includes providing at least a first nonrotating body vibration sensor, the at least first nonrotating vehicle body vibration sensor inputting at least first nonrotating body vibration sensor data correlating to vehicle vibrations into the vibration control system controller. The method includes providing at least a first nonrotating vehicle body circular force generator. The method includes coupling the at least first nonrotating vehicle body circular force generator to the nonrotating helicopter body. The method includes controlling with the controller the coupled at least first nonrotating vehicle body circular force generator to produce a rotating force upon the nonrotating helicopter body with a controllable rotating force magnitude and a controllable rotating force phase, the controllable rotating force magnitude controlled from a minimal force magnitude up to a maximum force magnitude, and with the controllable rotating force phase controlled in reference to the rotating member sensor data correlating to the relative rotation of the rotating member rotating relative to the nonrotating body with the vibration sensed by the at least first nonrotating vehicle body vibration sensor reduced by the controller.

The method of controlling helicopter vibrations includes providing a nonrotating helicopter body 524 below a rotating helicopter rotor member 522, preferably the helicopter rotating rotary wing hub. The method preferably includes providing a vehicle vibration control system controller 411, preferably with control system subsystems communicating within the vibration control system 409. The method preferably includes providing a vehicle rotating helicopter rotor member sensor 552, for inputting vehicle rotating member data correlating to a relative rotation of the vehicle rotating member rotating relative to the nonrotating vehicle body (preferably a tach input) into the vibration control system controller 411. The method preferably includes providing at least a first nonrotating body vibration sensor 554, the at least first nonrotating vehicle body vibration sensor inputting at least first nonrotating body vibration sensor data correlating to vibrations into the vibration control system controller 411. The method preferably includes providing at least a first nonrotating vehicle body circular force generator 530. The method preferably includes coupling the at least first nonrotating vehicle body circular force generator 530 to the nonrotating helicopter body 524. The method preferably includes controlling with the controller 411 the coupled at least first nonrotating vehicle body circular force generator 530 to produce a rotating force upon the nonrotating helicopter body 524 with a controllable rotating force magnitude and a controllable rotating force phase, the controllable rotating force magnitude controlled from a minimal force magnitude up to a maximum force magnitude (preferably 0 magnitude force when masses 180° separation opposed position and maximum force magnitude when masses 0° separation), and with the controllable rotating force phase controlled in reference to the rotating member sensor data correlating to the relative rotation of the rotating member 522 rotating relative to the nonrotating body 524 with the vibration sensed by the at least first nonrotating vehicle body vibration sensor 554 reduced by the controller 411.

The method preferably includes providing then nonrotating vehicle body vibration sensors 554 and m nonrotating vehicle body circular force generators 530 with n>m.

The method preferably includes the controlling of the rotating force to rotate at a harmonic of the rotating machine member rotating speed, preferably with the system/method producing circular forces while avoiding the calculation and generation of linear forces.

The method preferably includes generating a rotating reference signal from the vehicle rotating machine member data correlating to the relative rotation of the vehicle rotating machine member 522 rotating relative to the nonrotating vehicle body 524.

The method preferably includes calculating, with the controller, in reference to a rotating reference signal, the rotating force with a real part $\alpha$ and an imaginary part $\beta$. Preferably the method avoids and inhibits calculating linear forces for controlling the vibrations, preferably with the vibe control subsystem calculating real parts $\alpha_m$ and imaginary parts $\beta_m$ in generating circular force command signals which command/describe desired rotating force vectors, such circular force command signals $\alpha_m \beta_m$ are preferably sent to the rotor phase compute subsystem which in turn preferably computes mass phase signals, which are preferably sent to motor control/motor drive subsystem which generates motor drive signals that drive the masses around their circular paths, preferably motor drive signals that drive the masses to generate the circular forces with the motor drive signals driving the motors 538, 540 of the circular force generator 530.

The method preferably includes providing the at least first nonrotating vehicle body circular force generator 530 with at least a first rotating mass ($mass_{1\_1}$) 534 controllably driven about a first rotating mass axis 534' with a first rotating mass controllable rotating imbalance phase $\Phi_{1\_1}$ and at least a second corotating mass (mass$_{1\_2}$) 536 controllably driven about a second rotating mass axis 536' with a second rotating mass controllable rotating imbalance phase $\Phi_{1\_2}$.

The method preferably includes providing then nonrotating vehicle body vibration sensors 554 and m nonrotating vehicle body circular force generators 530 with n>m, with the vehicle vibration control system controller 411 generating a rotating reference signal from the vehicle rotating machine member data correlating to the relative rotation of the vehicle rotating machine member rotating relative to the nonrotating vehicle body. The first nonrotating vehicle body circular force generator 530 including first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal. The m$^{th}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m-2}$, the imbalance phase $\Phi_{m\_1}$ and the imbalance phase $\Phi_{m\_2}$ controlled in reference to the rotating reference signal.

The method preferably includes providing the first nonrotating vehicle body circular force generator 530 which includes the first rotating mass (mass$_{1\_1}$) 534 with a first rotating mass controllable rotating imbalance phase $\Phi_{1\_1}$ and the second corotating mass (mass$_{1\_2}$) 536 with a second rotating mass controllable rotating imbalance phase $\Phi_{1\_2}$. Preferably the the first rotating mass (mass$_{1\_1}$) 534 is driven with the first motor 538 and the second corotating mass (mass$_{1\_2}$) 536 is driven with the second motor 540.

In an embodiment, preferably the circular force generator 530 which includes the first rotating mass (mass$_{1\_1}$) 534 with a first rotating mass controllable rotating imbalance phase $\Phi_{1\_1}$ and the second corotating mass (mass$_{1\_2}$) 536 with a second rotating mass controllable rotating imbalance phase $\Phi_{1\_2}$, with a detent 576 linking between the first rotating mass (mass$_{m\_1}$) and the second corotating mass (mass$_{m\_2}$), and a motor for driving the first rotating mass (mass$_{m\_1}$), wherein the first rotating mass (mass$_{m\_1}$) comprises a master rotating mass (mass$_{m\_1}$) with a master rotating mass controllable rotating imbalance phase $\Phi_{1\_1}$, and the second corotating mass (mass$_{m\_2}$) comprises a slave corotating mass (mass$_{m\_2}$) with a slave rotating mass controllable rotating imbalance phase $\Phi_{1\_2}$ with the detent controlling the slave rotating mass controllable rotating imbalance phase $\Phi_{1\_2}$ relative to the master rotating mass controllable rotating imbalance phase $\Phi_{1\_1}$.

Preferably the method includes providing the n nonrotating vehicle body vibration sensors 554 and m nonrotating vehicle body circular force generators 530, with m $\geq$ 2 and n>m, with the vehicle vibration control system controller generating a rotating reference signal from the vehicle rotating machine member data correlating to the relative rotation of the vehicle rotating machine member rotating relative to the nonrotating vehicle body, with the first nonrotating vehicle body circular force generator 530 including a first rotating mass (mass$_{1\_1}$) 534 controllably driven about a first circular force generator axis 530' with a first rotating mass controllable rotating imbalance phase $\Phi_{1\_1}$ and a second corotating mass (mass$_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. Preferably a second nonrotating vehicle body circular force generator 530 is provided including a first rotating mass (mass$_{2\_1}$) 534 controllably driven about a second circular force generator axis 530" with a first rotating mass controllable rotating imbalance phase $\Phi_{2\_1}$ and a second corotating mass (mass$_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, with the second nonrotating vehicle body circular force generator 530 oriented relative to the first nonrotating vehicle body circular force generator 530 wherein the second circular force generator axis 530" is nonparallel with the first circular force generator axis 530'. In embodiments the axes are preferably oriented orthogonally. Preferably m $\geq$ 3, and a third nonrotating vehicle body circular force generator 530 is provided including a first rotating mass (mass$_{3\_1}$) 534 controllably driven about a third circular force generator axis 530''' with a first rotating mass controllable rotating imbalance phase $\Phi_{3\_1}$ and a second corotating mass (mass$_{3\_2}$) 536 controllably driven about the third circular force generator axis 530''' with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis and the first circular force generator axis.

Preferably the method includes mounting the circular force generators proximate the vehicle ceiling 544 and the floor 546. Preferably the method mounts the nonrotating vehicle body circular force generators 530 proximate the vehicle ceiling and floor. Preferably the vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. Preferably n nonrotating vehicle body vibration sensors 554 and m nonrotating vehicle body circular force generators 530 are provided with n>m. The controller 411 preferably calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 preferably mounted to the vehicle body 524 proximate the vehicle ceiling 544. The vehicle m$^{th}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal, the m$^{th}$ nonrotating vehicle body circular force generator 530 mounted to the vehicle body 524 proximate the vehicle floor 546. Preferably a plurality of circular force generators 530 are mounted to the vehicle body frame 524 proximate the floor 546, and preferably under the floor 546, and preferably proximate the vehicle nose, and preferably proximate the vehicle tail. Preferably a plurality of circular force generators 530 are mounted to the vehicle body frame 524 proximate the ceiling 544, and preferably above the ceiling 544, preferably proximate the vehicle tail, preferably to a vehicle tailcone frame.

Preferably the method includes controlling vehicle transmission 526 vibrations. Preferably the vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, method including mounting the first nonrotating vehicle body circular force generator 530 to the vehicle transmission 526. In an embodiment a plurality of nonrotating vehicle body circular force generators 530 are mounted to the transmission 526, and preferably the transmission is above the floor 546 and ceiling 544. Preferably the nonrotating vehicle body circular force generators 530 are mounted to the vehicle transmissions 526, preferably with the circular force generator axis 530' oriented relative to the rotation axis of the rotating machine member 522, most preferably with the circular force generator axis 530' oriented parallel with the rotating machine member rotor hub axis of rotation.

In an embodiment the invention includes a method of controlling vibrations. The method includes providing a nonrotating structure body having a rotating machine member. The method includes providing a vibration control system controller. The method includes providing a rotating machine member sensor, for inputting rotating member data correlating to a relative rotation of the rotating member rotating relative to the nonrotating body into the vibration control system controller. The method includes providing at least a first nonrotating body vibration sensor, the at least first nonrotating body vibration sensor inputting at least first nonrotating body vibration sensor data correlating to vibrations into the vibration control system controller. The method includes providing at least a first nonrotating body circular force generator. The method includes coupling the at least first nonrotating vehicle body circular force generator to the nonrotating structure body. The method includes controlling with the controller the coupled at least first nonrotating body circular force generator to produce a rotating force with a controllable rotating force magnitude and a controllable rotating force phase, the controllable rotating force magnitude controlled from a minimal force magnitude up to a maximum force magnitude, and with the controllable rotating force phase controlled relative to the rotating member sensor data correlating to the relative rotation of the rotating member rotating relative to the nonrotating body with the vibration sensed by the at least first nonrotating vehicle body vibration sensor reduced by the controller.

The method of controlling vibrations, includes providing nonrotating structure body 524 having a rotating machine member 522. The method includes providing vibration control system controller 411 with a vibration control system processor, a computer with inputs and outputs, to control the control system preferably with communicating subsystems. The method includes providing the rotating machine member sensor 552 for inputting rotating member data correlating to a relative rotation of the vehicle rotating member rotating relative to the nonrotating vehicle body (preferably a tach input) into the vibration control system controller 411. The method includes providing the nonrotating body vibration sensors 554, the first nonrotating body vibration sensors 554 inputting at vibration sensor data correlating to vehicle vibrations into the vehicle vibration control system controller 411. The method includes providing at least a first nonrotating vehicle body circular force generator 530. The method includes coupling the nonrotating vehicle body circular force generator 530 to the nonrotating structure body 524. The method includes controlling with the controller 411 the coupled at least first nonrotating body circular force generators 530 to produce rotating forces with controllable rotating force magnitude and controllable rotating force phase, the controllable rotating force magnitude controlled from a minimal force magnitude up to a maximum force magnitude (0 magnitude force when masses 180° separation opposed position, maximum force magnitude when masses 0° separation), and with the controllable rotating force phase controlled relative to the rotating member sensor data correlating to the relative rotation of the rotating member rotating relative to the nonrotating body (tach input) with the vibration sensed by the at least first nonrotating vehicle body vibration sensor reduced by the controller 411.

The method includes providing then nonrotating vehicle body vibration sensors and m nonrotating vehicle body circular force generators wherein n>m.

The method includes controlling the rotating force to rotate at a harmonic of the rotating machine member rotating speed.

The method includes generating a rotating reference signal from the vehicle rotating machine member data correlating to the relative rotation of the vehicle rotating machine member rotating relative to the nonrotating vehicle body. The method preferably includes calculating in reference to a rotating reference signal the rotating force with a real part $\alpha$ and an imaginary part $\beta$. Preferably the method avoids and inhibits calculating linear forces for controlling vibrations, preferably with vibe control subsystem, preferably within the controller 411, calculating real parts $\alpha_m$ and imaginary parts $\beta_m$ in generating circular force command signals which command/describe desired rotating force vectors, such circular force command signals $\alpha_m$ $\beta_m$ are preferably sent to the rotor phase compute subsystem which in turn preferably computes mass phase signals, which are preferably sent to motor control/motor drive subsystem which generates motor drive signals that drive the masses around their circular paths, preferably motor drive signals that drive the motors 538, 540 that drive the masses 534, 536 to generate the circular forces.

Preferably providing the at least first nonrotating vehicle body circular force generators 530 includes providing the at least first rotating mass (mass$_{1\_1}$) 534 controllably driven about a first rotating mass axis 534' with a first rotating mass controllable rotating imbalance phase $\Phi_{1\_1}$ and the at least second corotating mass (mass$_{1\_2}$) 536 controllably driven about second rotating mass axis 536' with a second rotating mass controllable rotating imbalance phase $\Phi_{1\_2}$.

Preferably n nonrotating vehicle body vibration sensors 554 and m nonrotating vehicle body circular force generators 530 with n>m are provided, the first nonrotating vehicle body circular force generator 530 including first rotating mass (mass$_{1\_1}$) 534 controllably driven about a first rotating mass axis 534' with a first rotating mass controllable rotating imbalance phase $\Phi_{1\_1}$ and second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to a rotating reference signal, and the m$^{th}$ nonrotating vehicle body circular force generator 530 including first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\_2}$, the imbalance phase $\Phi_{m\_1}$ and the imbalance phase $\Phi_{m\_2}$ controlled in reference to the rotating reference signal.

Preferably the method includes providing nonrotating vehicle body circular force generators 530 with the first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$. Preferably the method includes providing the motor 538 with the first rotating mass (mass$_{1\_1}$) 534 driven with the first motor 538 and providing the second motor 540 with the second corotating mass (mass$_{1\_2}$) 536 driven with the second motor 540.

Preferably the method includes providing nonrotating vehicle body circular force generators 530 with the first rotating mass (mass$_{1\_1}$) 534 with a first rotating mass controllable rotating imbalance phase $\Phi_{1\_1}$ and a second corotating mass (mass$_{1\_2}$) 536 with a second rotating mass controllable rotating imbalance phase $\Phi_{1\_2}$ with a detent 576 linking between the first rotating mass (mass$_{m\_1}$) and the second corotating mass (mass$_{m\_2}$), and a motor for driving the first rotating mass (mass$_{m\_1}$), wherein the first rotating mass (mass$_{m\_1}$) comprises a master rotating mass (mass$_{m\_1}$) with a master rotating mass controllable rotating imbalance phase $\Phi_{1\_1}$, and the second corotating mass (mass$_{m\_2}$) comprises a slave corotating mass (mass$_{m\_2}$) with a slave rotating mass controllable rotating imbalance phase $\Phi_{1\_2}$ with the detent controlling the slave rotating mass controllable rotating imbalance phase $\Phi_{1\_2}$ relative to the master rotating mass controllable rotating imbalance phase $\Phi_{1\_1}$ with the one motor driving both, preferably magnetically detented.

Preferably the method includes providing the n nonrotating vehicle body vibration sensors 554 and m nonrotating vehicle body circular force generators 530, with m $\geq$ 2 and n>m, with the vehicle vibration control system controller generating a rotating reference signal from the vehicle rotating machine member data correlating to the relative rotation of the vehicle rotating machine member rotating relative to the nonrotating vehicle body, with the first nonrotating vehicle body circular force generator 530 including a first rotating mass (mass$_{1\_1}$) 534 controllably driven about a first circular force generator axis 530' with a first rotating mass controllable rotating imbalance phase $\Phi_{1\_1}$ and a second corotating mass (mass$_{1\_2}$) 536 controllably driven about the first circular force generator axis 530' with a second rotating mass controllable rotating imbalance phase $\Phi_{1\_2}$, with the imbalance phase $\Phi_{1\_1}$ and the imbalance phase $\Phi_{1\_2}$ controlled in reference to the rotating reference signal. Preferably a second nonrotating vehicle body circular force generator 530 is provided including a first rotating mass (mass$_{2\_1}$) 534 controllably driven about a second circular force generator axis 530" with a first rotating mass controllable rotating imbalance phase $\Phi_{2\_1}$ and a second corotating mass (mass$_{2\_2}$) 536 controllably driven about the second circular force generator axis 530" with a second rotating mass controllable rotating imbalance phase $\Phi_{2\_2}$, with the imbalance phase $\Phi_{2\_1}$ and the imbalance phase $\Phi_{2\_2}$ controlled in reference to the rotating reference signal, with the second nonrotating vehicle body circular force generator 530 oriented relative to the first nonrotating vehicle body circular force generator 530 wherein the second circular force generator axis 530" is nonparallel with the first circular force generator axis 530'. In embodiments the axes are preferably oriented orthogonally. Preferably m ≥ 3, and a third nonrotating vehicle body circular force generator 530 is provided including a first rotating mass (mass$_{3\_1}$) 534 controllably driven about a third circular force generator axis 530''' with a first rotating mass controllable rotating imbalance phase $\Phi_{3\_1}$ and a second corotating mass (mass$_{3\_2}$) 536 controllably driven about the third circular force generator axis 530''' with a second rotating mass controllable rotating imbalance phase $\Phi_{3\_2}$, with the imbalance phase $\Phi_{3\_1}$ and the imbalance phase $\Phi_{3\_2}$ controlled in reference to the rotating reference signal, the third circular force generator axis oriented relative to the second circular force generator axis and the first circular force generator axis.

Preferably the method includes mounting the circular force generators proximate the vehicle ceiling 544 and the floor 546. Preferably the method mounts the nonrotating vehicle body circular force generators 530 proximate the vehicle ceiling and floor. Preferably the vehicle nonrotating vehicle body 524 includes a vehicle ceiling 544 and a distal vehicle floor 546, the distal vehicle floor below 546 the vehicle ceiling 544 under normal parking, use and flight of the vehicle in the presence of gravity. Preferably n nonrotating vehicle body vibration sensors 554 and m nonrotating vehicle body circular force generators 530 are provided with n>m. The controller 411 preferably calculates a rotating reference signal from the vehicle rotating machine member data correlating to the relative rotation of the vehicle rotating machine member 522 rotating relative to the nonrotating vehicle body 524. The first nonrotating vehicle body circular force generator 530 includes a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, the first nonrotating vehicle body circular force generator 530 preferably mounted to the vehicle body 524 proximate the vehicle ceiling 544. The vehicle m$^{th}$ nonrotating vehicle body circular force generator 530 including a first rotating mass (mass$_{m\_1}$) 534 controllably driven about a first rotating mass axis 534' with a first rotating mass controllable rotating imbalance phase $\Phi_{m\_1}$ and a second corotating mass (mass$_{m\_2}$) 536 controllably driven about a second rotating mass axis 536' with a second rotating mass controllable rotating imbalance phase $\Phi_{m\text{-}2}$, the imbalance phase $\Phi_{m\_1}$ and the imbalance phase $\Phi_{m\_2}$ controlled in reference to the rotating reference signal, the m$^{th}$ nonrotating vehicle body circular force generator 530 mounted to the vehicle body 524 proximate the vehicle floor 546. Preferably a plurality of circular force generators 530 are mounted to the vehicle body frame 524 proximate the floor 546, and preferably under the floor 546, and preferably proximate the vehicle nose, and preferably proximate the vehicle tail. Preferably a plurality of circular force generators 530 are mounted to the vehicle body frame 524 proximate the ceiling 544, and preferably above the ceiling 544, preferably proximate the vehicle tail, preferably to a vehicle tailcone frame.

Preferably the method includes controlling vehicle transmission 526 vibrations. Preferably the vehicle vibration control system controller 411 generates a rotating reference signal from the vehicle rotating machine member data correlating to the relative rotation of the vehicle rotating machine member 522 rotating relative to the nonrotating vehicle body 524. The first nonrotating vehicle body circular force generator 530 including a first rotating mass (mass$_{1\_1}$) 534 controllably driven about a first rotating mass axis 534' with a first rotating mass controllable rotating imbalance phase $\Phi_{1\_1}$ and a second corotating mass (mass$_{1\_2}$) 536 controllably driven about a second rotating mass axis 536' with a second rotating mass controllable rotating imbalance phase $\Phi_{1\_2}$, the imbalance phase $\Phi_{1\_1}$ and the imbalance phase $\Phi_{1\_2}$ controlled in reference to the rotating reference signal, method including mounting the first nonrotating vehicle body circular force generator 530 to the vehicle transmission 526. In an embodiment a plurality of nonrotating vehicle body circular force generators 530 are mounted to the transmission 526, and preferably the transmission is above the floor 546 and ceiling 544. Preferably the nonrotating vehicle body circular force generators 530 are mounted to the vehicle transmissions 526, preferably with the circular force generator axis 530' oriented relative to the rotation axis of the rotating machine member 522, most preferably with the circular force generator axis 530' oriented parallel with the rotating machine member rotor hub axis of rotation.

In an embodiment the invention includes a computer program product for a vibration control system. The computer program product comprising a computer readable medium. The computer program product comprising program instructions to monitor rotating machine member data correlating to a relative rotation of a rotating machine member rotating relative to a nonrotating body structure. The computer program product comprising program instructions to monitor nonrotating body structure vibration sensor data correlating to nonrotating body structure vibrations. The computer program product comprising program instructions to control a circular force generator mounted to the nonrotating body structure to control the circular force generator to output into the nonrotating body structure a rotating force with a controllable rotating force magnitude controlled from a minimal force magnitude up to a maximum force magnitude and a controllable rotating force phase controlled in reference to the monitored rotating machine member data to minimize nonrotating body structure vibrations.

Preferably the vibration control system computer program product includes a computer readable medium and first program instructions to monitor rotating machine member data correlating to a relative rotation of the rotating machine member 522 rotating relative to a nonrotating body structure 524. Preferably the vibration control system computer program product includes second program instructions to monitor nonrotating body structure vibration sensor data correlating to nonrotating body structure vibrations. Preferably the vibration control system computer program product includes third program instructions to control a circular force generator 530 mounted to the nonrotating body structure 524 to control the circular force generator 530 to output into the nonrotating body structure 524 a rotating force with a controllable rotating force magnitude controlled from a minimal force magnitude up to a maximum force magnitude and a controllable rotating force phase controlled in reference to the monitored rotating machine member data to minimize nonrotating body structure vibrations.

Preferably the second program instructions to monitor nonrotating body structure vibration sensor data correlating to nonrotating body structure vibrations, include instructions to monitor a plurality of nonrotating vehicle body vibration sensors' outputs from a plurality of nonrotating vehicle body vibration sensors 554 distributed about the nonrotating body structure 524.

Preferably the third program instructions to control the circular force generator 530 include rotating the rotating force at a harmonic vibration disturbance frequency which is a harmonic of the rotating machine member rotating speed.

Preferably the third program instructions to control the circular force generator 530 include instructions to calculate in reference to the rotating machine member 522 the rotating force with a real part $\alpha$ and an imaginary part $\beta$.

Preferably the program instructions avoid and inhibit calculating linear forces for controlling vibration.

Preferably vibe control subsystem includes instructions for calculating real parts $\alpha_m$ and imaginary parts $\beta_m$ in generating circular force command signals which command/describe desired rotating force vectors, and instructions for sending such circular force command signals $\alpha_m$ $\beta_m$ to rotor phase compute subsystem which in turn preferably includes instructions for computing mass phase signals, which are preferably includes instructions for sending such mass phase signals to the motor control/motor drive subsystem which generates motor drive signals that drive the masses around their circular paths, preferably motor drive signals that drive the masses to generate the circular forces.

Preferably the system includes instructions for rotating the rotating force at a harmonic vibration disturbance frequency which is a harmonic of the rotating machine member rotating speed.

Preferably the system includes instructions for controlling rotation of the first rotor mass 534 and a rotation of the second rotor mass 536.

In an embodiment the invention includes a computer system for reducing vibrations in a vehicle with a nonrotating body structure and a rotating machine member rotating relative to the nonrotating body structure. The computer system comprising computer media with computer program instructions including program instructions to monitor rotating machine member data correlating to the relative rotation of the rotating machine member rotating relative to the nonrotating body structure. The computer system comprising computer media with computer program instructions including program instructions to monitor nonrotating body structure vibration sensor data correlating to nonrotating body structure vibrations measured by a plurality of nonrotating vehicle body vibration sensors. The computer system comprising computer media with computer program instructions including program instructions to control a circular force generator mounted to the nonrotating body structure to control the circular force generator to produce a rotating force with a controllable rotating force magnitude controlled from a minimal force magnitude up to a maximum force magnitude and a controllable rotating force phase controlled in reference to the monitored rotating machine member data to minimize nonrotating body structure vibrations measured by the plurality of nonrotating vehicle body vibration sensors.

Preferably the computer system for reducing vibrations in the vehicle 520 with nonrotating body structure 524 and the rotating machine member 522 rotating relative to the nonrotating body structure 524 includes computer media with computer program instructions including first program instructions to monitor rotating machine member data correlating to the relative rotation of the rotating machine member 522 rotating relative to the nonrotating body structure 524. The system includes second program instructions to monitor nonrotating body structure vibration sensor data correlating to nonrotating body structure vibrations measured by a plurality of nonrotating vehicle body vibration sensors 554. The system third program instructions to control a circular force generator 530 mounted to the nonrotating body structure 524 to control the circular force generator 530 to produce a rotating force with a controllable rotating force magnitude controlled from a minimal force magnitude up to a maximum force magnitude and a controllable rotating force phase controlled in reference to the monitored rotating machine member data to minimize nonrotating body structure vibrations measured by the plurality of nonrotating vehicle body vibration sensors 554.

Preferably the system includes program instructions to rotate the rotating force at a harmonic vibration disturbance frequency which is a harmonic of the rotating machine member rotating speed.

Preferably the system includes program instructions to control the circular force generator 530 and to calculates in reference to the rotating machine member 522 the rotating force with a real part $\alpha$ and an imaginary part $\beta$.

Preferably the system includes program instructions to control the circular force generator 530 and to generate a plurality of circular force command signals, preferably with the vibe control subsystem generating circular force command signals which command/describe desired rotating force vectors, the circular force command signals $\alpha_m$ $\beta_m$ are preferably sent to rotor phase compute subsystem.

Preferably the system includes program instructions to control the circular force generator 530 and to generate a plurality of mass phase signals ($\Phi_{m\_1}$, $\Phi_{m\_2}$, rotating mass controllable rotating imbalance phase signals $\Phi_{m\_1}$ $\Phi_{m\_2}$, and imbalance phase $\Phi_{m\_1}$ and imbalance phase $\Phi_{m\_2}$ controlled in reference to rotating machine member reference signal, preferably rotor phase compute subsystem receives circular force command signals $\alpha_m$ $\beta_m$, and generates the mass phase signals $\Phi_{m\_1}$, $\Phi_{m\_2}$ for the two corotating mass imbalances 534, 536).

Preferably the system includes program instructions to control the circular force generator 530 and to generate a plurality of motor drive signals to drive a first mass 534 and a second mass 536 (rotating mass controllable rotating imbalance phase siganls $\Phi_{m\_1}$ $\Phi_{m\_2}$ preferably received into motor control/motor drive subsystem from rotor phase compute subsystem receives, with motor drive signals driving the circular force generator mass imbalances 534, 536 to controllably rotate to produce the rotating force).

In an embodiment the invention includes a computer data signal. The computer data signal transmitted in a vibration reducing computer system for a vehicle with a nonrotating body structure and a rotating machine member rotating relative to the nonrotating body structure. The computer data signal comprising a circular force command signal including information for producing a rotating force with a controllable rotating force magnitude controlled from a minimal force magnitude up to a maximum force magnitude into the nonrotating body structure and a controllable rotating force phase controlled in reference to the rotating machine member to minimize nonrotating body structure vibrations in the nonrotating body structure.

Preferably the computer data signals are transmitted in the vibration reducing computer system 409 for the vehicle 520 with the nonrotating body structure 524 and rotating machine member 522 rotating relative to the nonrotating body structure 524. Preferably the computer data signal includes a circular force command signal with information for producing a rotating force with a controllable rotating force magnitude controlled from a minimal force magnitude up to a maximum force magnitude into the nonrotating body structure 524 and a controllable rotating force phase controlled in reference to the rotating machine member 522 to minimize nonrotating body structure vibrations in the nonrotating body structure 524. Preferably the vibe control subsystem generates the circular force command data signals which command/describe desired rotating force vectors, circular force command data signals $\alpha_m$ $\beta_m$ are preferably sent to rotor phase compute subsystem. Preferably the circular force command signal includes a real part $\alpha$ and an imaginary part $\beta$.

In an embodiment the invention includes a vibration control system for controlling vibration on a structure responsive to a vibration disturbance at a given frequency. The vibration control system preferably includes a circular force generator for creating a controllable rotating force with controllable magnitude and phase. The vibration control system preferably includes a vibration sensor for generating a vibration signal indicative of vibration of the structure. The vibration control system preferably includes a controller that receives the vibration signal from the vibration sensor and commands the force generator to create said rotating force wherein such vibration of the structure sensed by the sensor is reduced. Preferably the vibration control system includes multiple circular force generators and multiple vibration sensors distributed throughout the structure, most preferably with the quantity of vibration sensors greater than the quantity of circular force generators. Preferably the vibration control system includes a reference sensor for generating a persistent signal indicative of the vibration disturbance, preferably wherein the reference sensor monitors a rotating machine member that is rotating relative to the structure and producing the vibrations. Preferably the controllable rotating force rotates at a given harmonic circular force generating frequency, preferably a harmonic of a rotating machine member that is rotating relative to the structure and producing the vibrations. Preferably the controllable rotating force is determined and calculated as circular force described as a real and imaginary part $\alpha$ and $\beta$, preferably with a circular force command signal generated with $\alpha$ and $\beta$. Preferably the controllable rotating force is generated with two corotating imbalance moving masses, which are preferably controlled with imbalance phasing $\Phi_1$, $\Phi_2$ with the actual imbalance phasing $\Phi_1$, $\Phi_2$ realizing the commanded $\alpha$, $\beta$ circular force.

Preferably the vibration control system 409 for controlling vibration on structure 524 responsive to a vibration disturbance at a given frequency includes a force generator 530 for creating a controllable rotating force with controllable magnitude and phase, a vibration sensor 554 for generating a vibration signal indicative of vibration of the structure 524, a controller 411 that receives the vibration signal from the vibration sensor 554 and commands the force generator 530 to create a rotating force such that vibration is reduced. Preferably the system include the plurality of force generator 530 and vibration sensor 554, with the number of sensors 554 greater than the number of force generators 530. Preferably the system includes a reference sensor for generating a persistent signal indicative of the vibration disturbance. Preferably the controllable rotating force rotates at the given frequency.

In an embodiment the invention include a vibration control system for controlling a vibration on a structure responsive to a vibration disturbance at a given frequency, said vibration control system including a circular force generator for creating a controllable rotating force with a controllable magnitude and controllable magnitude phase, said vibration control system including a vibration sensor for generating a vibration signal indicative of said vibration of said structure, said vibration control system including a controller that receives said vibration signal from said vibration sensor and commands said circular force generator to create said rotating force wherein such vibration of said structure sensed by said sensor is reduced. Preferably the vibration control system 409 includes a plurality of m circular force generators 530 and a plurality n vibration sensors 554 distributed throughout the structure 524, preferably n>m. Preferably the vibration control system 409 includes a reference sensor 552 for generating a persistent signal indicative of said vibration disturbance, preferably the reference sensor 552 monitors a rotating machine member 522 that is rotating relative to said structure 524 and producing said vibration. Preferably the controllable rotating force rotates at a given harmonic circular force generating frequency. Preferably the vibration control system 409 includes a reference sensor 552 which monitors a rotating machine member 522 that is rotating relative to the structure 524, and the given harmonic circular force generating frequency is a harmonic of a harmonic of the monitored rotating machine member 522. Preferably the controllable rotating force is determined and calculated with a real and a imaginary part ($\alpha$ and $\beta$). Preferably a circular force command signal is generated with a real and a imaginary part ($\alpha$ and $\beta$). Preferably the controllable rotating force is generated with two corotating imbalance moving masses 534 and 536.

The methods of controlling vibrations preferably avoids creating linear forces, and instead creates rotating forces, preferably with the methods and systems including the calculation of rotating forces and avoiding the calculation of linear forces. The active vibration control systems preferably include a pair of co-rotating masses, preferably imbalanced rotors that are individually motorized or motorized as a master/slave phased pair, preferably a detented phase pair.

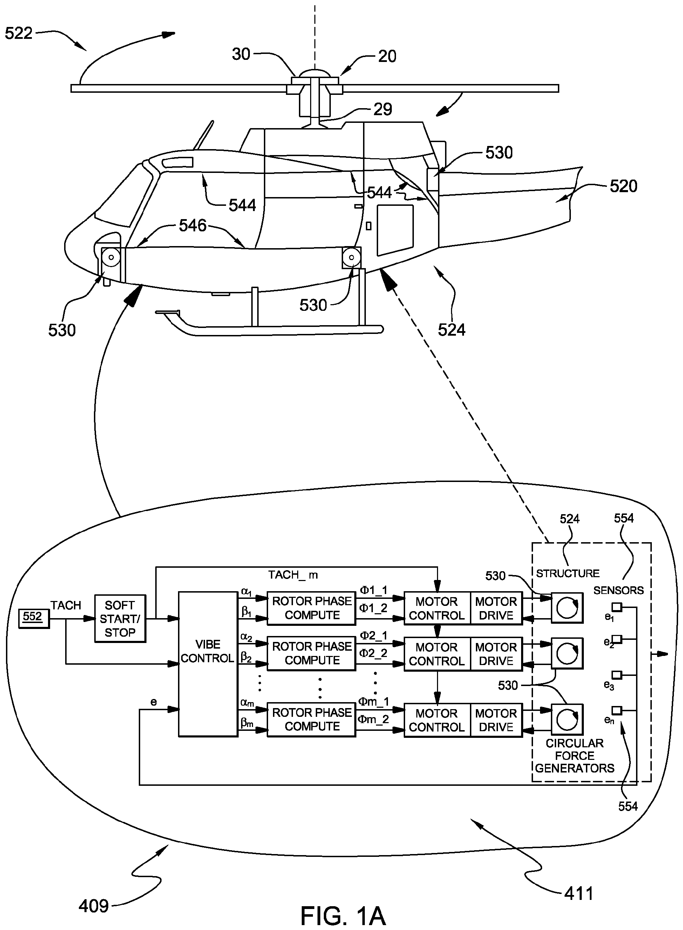

The vibration control actuators of the system/method create circular forces of controllable magnitude and temporal phase. Preferably system identification is conducted with circular forces, with parameters that describe a circular force propagating thru the control algorithm of the systems/methods. For example, as shown in FIG. 1, the parameters $\alpha$ and $\beta$ describe the in-phase and out-of-phase components of a circular force. The parameters that describe a circular force are converted into two rotor phases before being sent to the motor control. The methods preferably computationally convert rotary forces into rotor phases. The control structure using circular force generators is shown in FIG 1, with FIG. 1B the adaptive circular force algorithm illustrating the operation of the systems and methods. Preferably the circular force generator actuators are distributed throughout the vehicle structure, with the circular force generators inputting circular forces into the vehicle nonrotating body structure to reduce vibration.

Consider two co-rotating, co-axial rotors (a circular force generator) with imbalance masses of magnitude $m$ located at a radial distance $r$ from the center of rotation. The angular positions of the masses are given by $\theta_i(t)$ which are measured counter-clockwise from the positive x-axis. The rotors are independently controllable but are synchronized to rotate at the same speed, co.

The net forces in the x and y directions are:

$$F_x(t) = F_0 \left[ \cos(\theta_1(t)) + \cos(\theta_2(t)) \right]$$

$$F_y(t) = F_0 \left[ \sin(\theta_1(t)) + \sin(\theta_2(t)) \right]$$

where $F_0 = mr\omega^2$.

Since the imbalances rotate at the same speed $\omega$ but different phase angles, their angular positions can be written as:

$$\theta_1 = \omega t + \phi_1 \text{ and } \theta_2 = \omega t + \phi_2$$

Because the actuator generates a circular force of varying magnitude, it is preferred to write the force output as a circular force. The angle, $\theta_{12}$, and magnitude, $F_{12}$, of this force can be independently controlled. The resultant force components in the x and y directions from this circular force can be written as:

$$F_x(t) = F_{12} \cos(\theta_{12}(t))$$

$$F_y(t) = F_{12} \sin(\theta_{12}(t))$$

where $0 \leq F_{12} \leq 2mr\omega^2$.

The above two formulations for the resultant x and y forces are equivalent. Setting them equal, yields:

$$\alpha = F_{12}\cos(\phi_{12}) = F_0\left[\cos(\phi_1) + \cos(\phi_2)\right]$$

$$\beta = F_{12}\sin(\phi_{12}) = F_0\left[\sin(\phi_1) + \sin(\phi_2)\right]$$

The new parameters, $\alpha$ and $\beta$, are the in-phase and out-of-phase components, respectfully, of the circular force. Preferably in these systems/methods, these components are the values that are adapted in the gradient-descent algorithm, preferably with resulting vehicle vibrations reduced. Adaptations are preferably conducted using these $\alpha$ and $\beta$ force components associated with the circular force actuators.

The method/system preferably includes a saturation control algorithm method and system for saturation conditions when operating the circular force generators. The maximum magnitude of the force generated by a circular actuator is limited to $2F_0$. This limitation is placed within the LMS algorithm to prevent the forces from going beyond the limit of what the actuators can deliver. The magnitude of the force from each circular actuator is calculated as:

$$F_{12} = \sqrt{\alpha^2 + \beta^2}$$

The force components are then limited to what the actuator can actually output using the following equations:

$$\alpha_{out} = \frac{\min(F_{12}, 2F_0)}{F_{12}}\alpha_{in}$$

$$\beta_{out} = \frac{\min(F_{12}, 2F_0)}{F_{12}}\beta_{in}$$

The method/system preferably includes a computing rotor phases algorithm method and system for computing rotor phases when operating the circular force generators. Preferably given alpha and beta from adaptation, the corresponding rotor phase angles must be calculated. This calculation is done in the [Rotor Phase Compute] block in FIG. 1. To calculate these two phase angles, the following equations are preferably solved in the inverse.

$$\alpha = F_0\left[\cos(\phi_1) + \cos(\phi_2)\right]$$

$$\beta = F_0\left[\sin(\phi_1) + \sin(\phi_2)\right]$$

Squaring both sides and adding the equations yields:

$$\alpha^2 + \beta^2 = F_0^2\left(2 + 2\left(\cos(\phi_1)\cos(\phi_2) + \sin(\phi_1)\sin(\phi_2)\right)\right)$$

$$\alpha^2 + \beta^2 = 4F_0^2\left(\frac{1}{2} + \frac{1}{2}\left(\cos(\phi_1 - \phi_2)\right)\right)$$

$$\alpha^2 + \beta^2 = 4F_0^2\cos^2\left(\frac{\phi_1 - \phi_2}{2}\right)$$

Another equation can be found by dividing the equations as shown below:

$$\frac{\beta}{\alpha} = \frac{\sin(\phi_1) + \sin(\phi_2)}{\cos(\phi_1) + \cos(\phi_2)} = \frac{2\sin\left(\dfrac{\phi_1 + \phi_2}{2}\right)\cos\left(\dfrac{\phi_1 - \phi_2}{2}\right)}{2\cos\left(\dfrac{\phi_1 + \phi_2}{2}\right)\cos\left(\dfrac{\phi_1 - \phi_2}{2}\right)}$$

$$\frac{\beta}{\alpha} = \tan\left(\frac{\phi_1 + \phi_2}{2}\right)$$

Rewriting these equations gives:

$$\frac{1}{2}\begin{bmatrix} 1 & -1 \\ 1 & 1 \end{bmatrix}\begin{bmatrix} \phi_1 \\ \phi_2 \end{bmatrix} = \begin{bmatrix} \cos^{-1}\dfrac{\sqrt{\alpha^2 + \beta^2}}{2F_0} \\ \tan^{-1}\dfrac{\beta}{\alpha} \end{bmatrix}$$

The solution to the inverse problem is then:

$$\begin{bmatrix} \phi_1 \\ \phi_2 \end{bmatrix} = \begin{bmatrix} 1 & 1 \\ -1 & 1 \end{bmatrix}\begin{bmatrix} \cos^{-1}\dfrac{\sqrt{\alpha^2 + \beta^2}}{2F_0} \\ \tan^{-1}\dfrac{\beta}{\alpha} \end{bmatrix}$$

The active vibration control system preferably uses actuators with two co-rotating imbalanced rotors, to create circular forces of controllable magnitude and temporal phase.

## Claims

1. A vehicle vibration control system (409) for controlling troublesome vibrations in a nonrotating vehicle body (524) having a rotating machine member (522), said vehicle vibration control system (409) comprising:

   a vehicle vibration control system controller (411);,
   a rotating machine member sensor (552), for inputting vehicle rotating machine member data correlating to a relative rotation of said rotating machine member rotating relative to said nonrotating vehicle body (524) into said vehicle vibration control system controller (411),
   at least a first nonrotating vehicle body vibration sensor (554), said at least first nonrotating vehicle body vibration sensor (554) inputting at least first nonrotating vehicle body vibration sensor data correlating to vehicle vibrations into said vehicle vibration control system controller (411);
   at least a first nonrotating vehicle body circular force generator (530), said at least a first nonrotating vehicle body circular force generator (530) for fixedly mounting to said nonrotating vehicle body (524) ;
   wherein said at least first nonrotating vehicle body circular force generator (530) is configured to be controlled by said vehicle vibration control system controller (411) to produce a rotating force with a controllable rotating force magnitude and a controllable rotating force phase;
   wherein said at least first nonrotating vehicle body circular force generator (530) includes at least a first rotating mass ($\text{mass}_{1\_1}$) (534) controllably driven about a first rotating mass axis (534') with a first rotating mass controllable rotating imbalance phase $\Phi_{1\_1}$ and at least a second corotating mass ($\text{mass}_{1\_2}$) (536) controllably driven about a second rotating mass axis (536') with a second rotating mass controllable rotating imbalance phase $\Phi_{1\_2}$; and
   said controllable rotating force magnitude is configured to be controlled from a minimal force magnitude up to a maximum force magnitude, and with said controllable rotating force phase controlled in reference to said rotating machine member sensor data correlating to said relative rotation of said vehicle rotating machine member (522) rotating relative to said nonrotating vehicle body (524) with said vehicle vibration sensed by said at least first nonrotating vehicle body vibration sensor (554) reduced by said vehicle vibration control system controller (411);
wherein the first rotating mass axis (534') and the second rotating mass axis (536') overlap.

2. A system, as claimed in claim 1, including n nonrotating vehicle body vibration sensors (554) and m nonrotating vehicle body circular force generators (530) wherein n>m.

3. A system, as claimed in claim 1, wherein said rotating force is controlled to rotate at a harmonic of the rotating machine member (522) rotating speed.

4. A system, as claimed in claim 1, wherein said vehicle vibration control system controller (411) generates a rotating reference signal from said vehicle rotating machine member sensor (552) data correlating to said relative rotation of said vehicle rotating machine member (522) rotating relative to said nonrotating vehicle body (524).

5. A system, as claimed in claim 1, wherein said vehicle vibration control system controller (411) calculates in reference to a rotating reference signal said rotating force with a real part $\alpha$ and an imaginary part $\beta$.

6. A system, as claimed in claim 1, including n nonrotating vehicle body vibration sensors (554) and m nonrotating vehicle body circular force generators (530), wherein
said vehicle vibration control system controller (411) generates a rotating reference signal from said vehicle rotating machine member sensor (552) data correlating to said relative rotation of said vehicle rotating machine member (522) rotating relative to said nonrotating vehicle body (524),
said imbalance phase $\Phi_{1\_1}$ and said imbalance phase $\Phi_{1\_2}$ being controlled in reference to said rotating reference signal; and
said $m^{th}$ nonrotating vehicle body circular force generator (530) including a first rotating mass (mass$_{m\_1}$) (534) controllably driven about a first rotating mass axis (534') with a first rotating mass controllable rotating imbalance phase $\Phi_{m\_1}$ and a second corotating mass (mass$_{m\_2}$) (536) controllably driven about a second rotating mass axis (536') with a second rotating mass controllable rotating imbalance phase $\Phi_{m-2}$, said imbalance phase $\Phi_{m\_1}$ and said imbalance phase $\Phi_{m\_2}$ controlled in reference to said rotating reference signal.

7. A system, as claimed in claim 1, wherein said first rotating mass (mass$_{1\_1}$) (534) is driven with a first motor (538) and said second corotating mass (mass$_{1\_2}$) (536) is driven with a second motor (540).

8. A system, as claimed in claim 1, with a detent (576) linking between said first rotating mass (mass$_{m\_1}$) (534) and said second corotating mass (mass$_{m\_2}$) (536), and a motor (538)for driving said first rotating mass (mass$_{m\_1}$) (534), wherein said first rotating mass (mass$_{m\_1}$) (534) comprises a master rotating mass (massm_1) with a master rotating mass controllable rotating imbalance phase $\Phi_{1\_1}$, and said second corotating mass (mass$_{m\_2}$) (536) comprises a slave corotating mass (mass$_{m\_2}$) with a slave rotating mass controllable rotating imbalance phase $\Phi_{1\_2}$ with said detent (576) controlling said slave rotating mass controllable rotating imbalance phase $\Phi_{1\_2}$ relative to said master rotating mass controllable rotating imbalance phase $\Phi_{1\_1}$.

9. A system, as claimed in claim 1, including n nonrotating vehicle body vibration sensors (554) and m nonrotating vehicle body circular force generators (530), with m $\geq$ 2, and
a second nonrotating vehicle body circular force generator (530) including a first rotating mass (mass$_{2\_1}$) (534) controllably driven about a second circular force generator axis (530") with a first rotating mass controllable rotating imbalance phase $\Phi_{2\_1}$ and a second corotating mass (mass$_{2\_2}$) controllably driven about said second circular force generator axis (530") with a second rotating mass controllable rotating imbalance phase $\Phi_{2\_2}$, said second nonrotating vehicle body circular force generator (530) oriented relative to said first nonrotating vehicle body circular force generator (530) wherein said second circular force generator axis (530") is nonparallel with said first circular force generator axis (530').

10. A system, as claimed in claim 9, wherein m $\geq$ 3, and including a third nonrotating vehicle body circular force generator (530) including a first rotating mass (mass$_{3\_1}$) (534) controllably driven about a third circular force generator axis (530"') with a first rotating mass controllable rotating imbalance phase $\Phi_{3\_1}$ and a second corotating mass (mass$_{3\_2}$) (536) controllably driven about said third circular force generator axis (530"') with a second rotating mass controllable rotating imbalance phase $\Phi_{3\_2}$, said third circular force generator axis (530"') oriented relative to said second circular force generator axis (530") and said first circular force generator axis (530').

**11.** A vehicle (520) comprising a system, as claimed in claim 1, and a nonrotating vehicle body (524) having a rotating machine member (522), wherein said vehicle nonrotating vehicle body (524) further comprises:

a vehicle ceiling (544) and a distal vehicle floor (546), said distal vehicle floor (546) below said vehicle ceiling (544), including n nonrotating vehicle body vibration sensors (554) and m nonrotating vehicle body circular force generators (530),

said vehicle vibration control system controller (411) calculates a rotating reference signal from said rotating machine member sensor data correlating to said relative rotation of said rotating machine member (522) rotating relative to said nonrotating vehicle body (524),

said imbalance phase $\Phi_{1\_1}$ and said imbalance phase $\Phi_{1\_2}$ controlled in reference to said rotating reference signal, said first nonrotating vehicle body circular force generator (530) mounted to said nonrotating vehicle body (524) proximate said vehicle ceiling (544), and

said $m^{th}$ nonrotating vehicle body (524) circular force generator (530) including a first rotating mass ($mass_{m\_1}$) (534) controllably driven about a first rotating mass axis (534') with a first rotating mass controllable rotating imbalance phase $\Phi_{m\_1}$ and a second corotating mass ($mass_{m\_2}$) (536) controllably driven about a second rotating mass axis (536') with a second rotating mass controllable rotating imbalance phase $\Phi_{m\_2}$, said imbalance phase $\Phi_{m\_1}$ and said imbalance phase $\Phi_{m\_2}$ controlled in reference to said rotating reference signal, said $m^{th}$ nonrotating vehicle body circular force generator (530) mounted to said nonrotating vehicle body (524) proximate said vehicle floor (546).

**12.** A vehicle (520) comprising a system, as claimed in claim 1, and a nonrotating vehicle body (524) having a rotating machine member (522), wherein said vehicle nonrotating vehicle body (524) further comprises:

a vehicle transmission (526) for transmitting rotational power to said rotating machine member (522),

said vehicle vibration control system controller (411) calculates a rotating reference signal from said rotating machine member sensor data correlating to said relative rotation of said rotating machine member (522) rotating relative to said nonrotating vehicle body (524),

said imbalance phase $\Phi_{1\_1}$ and said imbalance phase $\Phi_{1\_2}$ controlled in reference to said rotating reference signal, said first nonrotating vehicle body circular force generator (530) mounted to said vehicle transmission (526).

**13.** A system, as claimed in claim 1, wherein said circular force generator (530) includes at least a first rotating externally housed cooling fan for cooling said circular force generator (530).

**Patentansprüche**

**1.** Fahrzeugvibrationssteuersystem (409) zum Steuern von störenden Vibrationen in einer nicht rotierenden Fahrzeugkarosserie (524) mit einem rotierenden Maschinenelement (522), wobei das genannte Fahrzeugvibrationssteuersystem (409) Folgendes umfasst:

einen Fahrzeugvibrationssteuersystem-Controller (411);
einen rotierenden Maschinenelementesensor (552) zum Eingeben von Daten des rotierenden Maschinenelements des Fahrzeugs, die sich auf eine relative Rotation des genannten rotierenden Maschinenelements bezieht, das relativ zu der genannten nicht rotierenden Fahrzeugkarosserie (524) rotiert, in den genannten Fahrzeugvibrationssteuersystem-Controller (411),
wenigstens einen ersten nicht rotierenden Fahrzeugkarosserie-Vibrationssensor (554), wobei der genannte wenigstens erste nicht rotierende Fahrzeugkarosserie-Vibrationssensor (554) wenigstens erste nicht rotierende Fahrzeugkarosserie-Vibrationssensordaten in Bezug auf Fahrzeugvibrationen in den genannten Fahrzeugvibrationssteuersystem-Controller (411) eingibt;
wenigstens einen ersten nicht rotierenden Fahrzeugkarosserie-Rundkraftgenerator (530), wobei der genannte wenigstens eine erste nicht rotierende Fahrzeugkarosserie-Rundkraftgenerator (530) zum stationären Montieren an der genannten nicht rotierenden Fahrzeugkarosserie (524) dient;
wobei der genannte wenigstens erste nicht rotierende Fahrzeugkarosserie-Rundkraftgenerator (530) zum Steuern durch den genannten Fahrzeugvibrationssteuersystem-Controller (411) konfiguriert ist, um eine Drehkraft mit einer regelbaren Drehkraftgröße und einer regelbaren Drehkraftphase zu produzieren;
wobei der genannte wenigstens erste nicht rotierende Fahrzeugkarosserie-Rundkraftgenerator (530) wenigstens eine erste rotierende Masse ($mass_{1\_1}$) (534) beinhaltet, die steuerbar um eine erste rotierende Massenachse (534') mit einer ersten drehmassenregelbaren Rotationsunwuchtphase $\Phi_{1\_1}$ und wenigstens einer zweiten corotierenden Masse (mass$_{1\_2}$) (536) beinhaltet, die steuerbar um eine zweite rotierende Massenachse (536') mit einer zweiten drehmassenregelbaren Rotationsunwuchtphase $\Phi_{1\_2}$ angetrieben wird; und

die genannte regelbare Drehkraftgröße zum Regeln von einer minimalen Kraftgröße bis zu einer maximalen Kraftgröße konfiguriert ist, wobei die genannte regelbare Drehkraftphase, die in Bezug auf die genannten Daten des Sensors des rotierenden Maschinenelements geregelt wird, die sich auf die genannte relative Rotation des genannten rotierenden Maschinenelements (522) des Fahrzeugs bezieht, das relativ zu der genannten nicht rotierenden Fahrzeugkarosserie (524) rotiert, wobei die genannte, von dem genannten wenigstens ersten nicht rotierenden Fahrzeugkarosserie-Vibrationssensor (554) erfasste Fahrzeugvibration durch den genannten Fahrzeugvibrationssteuersystem-Controller (411) reduziert wird;

wobei die erste rotierende Massenachse (534') und die zweite rotierende Massenachse (536') überlappen.

2. System nach Anspruch 1, das n nicht rotierende Fahrzeugkarosserie-Vibrationssensoren (554) und m nicht rotierende Fahrzeugkarosserie-Rundkraftgeneratoren (530) beinhaltet, wobei n>m ist.

3. System nach Anspruch 1, wobei die genannte Drehkraft so geregelt wird, dass sie mit einer Harmonischen der Drehgeschwindigkeit des rotierenden Maschinenelements (522) rotiert.

4. System nach Anspruch 1, wobei der genannte Fahrzeugvibrationssteuersystem-Controller (411) ein Drehreferenzsignal von den Daten des genannten Sensors des rotierenden Maschinenelements (552) des Fahrzeugs in Bezug auf die genannte relative Rotation des genannten rotierenden Maschinenelements (522) des Fahrzeugs erzeugt, das relativ zu der genannten nicht rotierenden Fahrzeugkarosserie (524) rotiert.

5. System nach Anspruch 1, wobei der genannte Fahrzeugvibrationssteuersystem-Controller (411) die genannte Drehkraft mit einem realen Teil $\alpha$ und einem imaginären Teil $\beta$ in Bezug auf ein Drehreferenzsignal berechnet.

6. System nach Anspruch 1, das n nicht rotierende Fahrzeugkarosserie-Vibrationssensoren (554) und m nicht rotierende Fahrzeugkarosserie-Rundkraftgeneratoren (530) aufweist, wobei

der genannte Fahrzeugvibrationssteuersystem-Controller (411) ein Drehreferenzsignal von den genannten Daten des Sensors des rotierenden Maschinenelements (552) des Fahrzeugs in Bezug auf die genannte relative Rotation des genannten rotierenden Maschinenelements (522) des Fahrzeugs erzeugt, das relativ zu der genannten nicht rotierenden Fahrzeugkarosserie (524) rotiert,

wobei die genannte Unwuchtphase $\Phi_{1\_1}$ und die genannte Unwuchtphase $\Phi_{1\_2}$ in Bezug auf das genannte Drehreferenzsignal geregelt werden; und

wobei der genannte m-te nicht rotierende Fahrzeugkarosserie-Rundkraftgenerator (530) eine erste rotierende Masse (mass$_{m\_1}$) (534), die steuerbar um eine erste rotierende Massenachse (534') mit einer ersten drehmassenregelbaren Rotationsunwuchtphase $\Phi_{m\_1}$ und eine zweite corotierende Masse (mass$_{m\_2}$) (536) beinhaltet, die steuerbar um eine zweite rotierende Massenachse (536') mit einer zweiten drehmassenregelbaren Rotationsunwuchtphase $\Phi_{m\_2}$ angetrieben wird, wobei die genannte Unwuchtphase $\Phi_{m\_1}$ und die genannte Unwuchtphase $\Phi_{m\_2}$ in Bezug auf das genannte Drehreferenzsignal geregelt werden.

7. System nach Anspruch 1, wobei die genannte erste rotierende Masse (mass$_{1\_1}$) (534) von einem ersten Motor (538) angetrieben wird und die genannte zweite corotierende Masse (mass$_{1\_2}$) (536) von einem zweiten Motor (540) angetrieben wird.

8. System nach Anspruch 1, mit einer Raste (576), die zwischen der genannten ersten rotierenden Masse (mass$_{m\_1}$) (534) und der genannten zweiten corotierenden Masse (mass$_{m\_2}$) (536) verbindet, und einem Motor (538) zum Antreiben der genannten ersten rotierenden Masse (mass$_{m\_1}$) (534), wobei die genannte erste rotierende Masse (mass$_{m\_1}$) (534) eine rotierende Master-Masse (mass$_{m\_1}$) mit einer drehmassenregelbaren Master-Rotationsunwuchtphase $\Phi_{1\_1}$ umfasst und die genannte zweite corotierende Masse (mass$_{m\_2}$) (536) eine corotierende Slave-Masse (mass$_{m\_2}$) mit einer drehmassenregelbaren Slave-Rotationsunwuchtphase $\Phi_{1\_2}$ umfasst, wobei die genannte Raste (576) die genannte drehmassenregelbare Slave-Rotationsunwuchtphase $\Phi_{1\_2}$ relativ zu der genannten drehmassenregelbaren Master-Rotationsunwuchtphase $\Phi_{1\_1}$ regelt.

9. System nach Anspruch 1, das n nicht rotierende Fahrzeugkarosserie-Vibrationssensoren (554) und m nicht rotierende Fahrzeugkarosserie-Rundkraftgeneratoren (530) aufweist, wobei m $\geq$ 2 ist, und

einen nicht rotierenden Fahrzeugkarosserie-Rundkraftgenerator (530) mit einer ersten rotierenden Masse (mass$_{2\_1}$) (534), die steuerbar um eine zweite Rundkraftgeneratorachse (530") mit einer ersten drehmassenregelbaren Ro-

tationsunwuchtphase $\phi_{2\_1}$ angetrieben wird, und einer zweiten corotierenden Masse (mass$_{2\_2}$), die steuerbar um die genannte zweite Rundkraftgeneratorachse (530") mit einer zweiten drehmassenregelbaren Rotationsunwuchtphase $\phi_{2\_2}$ angetrieben wird, wobei der genannte zweite nicht rotierende Fahrzeugkarosserie-Rundkraftgenerator (530) relativ zu dem genannten ersten nicht rotierenden Fahrzeugkarosserie-Rundkraftgenerator (530) orientiert ist, wobei die genannte zweite Rundkraftgeneratorachse (530") nichtparallel zu der genannten ersten Rundkraftgeneratorachse (530') ist.

**10.** System nach Anspruch 9, wobei m ≥ 3 ist, das einen dritten nicht rotierenden Fahrzeugkarosserie-Rundkraftgenerator (530) mit einer ersten rotierenden Masse (mass$_{3\_1}$) (534) aufweist, die steuerbar um eine dritte Rundkraftgeneratorachse (530''') mit einer ersten drehmassenregelbaren Rotationsunwuchtphase $\phi_{3\_1}$ angetrieben wird, und einer zweiten corotierenden Masse (mass$_{3\_2}$) (536), die steuerbar um die genannte dritte Rundkraftgeneratorachse (530''') mit einer zweiten drehmassenregelbaren Rotationsunwuchtphase $\phi_{3\_2}$ angetrieben wird, wobei die genannte dritte Rundkraftgeneratorachse (530''') relativ zu der genannten zweiten Rundkraftgeneratorachse (530") und der genannten ersten Rundkraftgeneratorachse (530') orientiert ist.

**11.** Fahrzeug (520), das ein System nach Anspruch 1 und eine nicht rotierende Fahrzeugkarosserie (524) mit einem rotierenden Maschinenelement (522) umfasst, wobei die genannte nicht rotierende Fahrzeugkarosserie (524) ferner Folgendes umfasst:

ein Fahrzeugdach (544) und einen distalen Fahrzeugboden (546), wobei sich der genannte distale Fahrzeugboden (546) unter dem genannten Fahrzeugdach (544) befindet, mit n nicht rotierenden Fahrzeugkarosserie-Vibrationssensoren (554) und m nicht rotierenden Fahrzeugkarosserie-Rundkraftgeneratoren (530), wobei der genannte Fahrzeugvibrationssteuersystem-Controller (411) ein Drehreferenzsignal von den genannten Daten des Sensors des rotierenden Maschinenelements in Bezug auf die genannte relative Rotation des genannten rotierenden Maschinenelements (522) berechnet, das relativ zu der nicht rotierenden Fahrzeugkarosserie (524) rotiert, wobei die genannte Unwuchtphase $\phi_{1\_1}$ und die genannte Unwuchtphase $\Phi_{1\_2}$ in Bezug auf das genannte Drehreferenzsignal gesteuert werden, wobei der genannte nicht rotierende Fahrzeugkarosserie-Rundkraftgenerator (530) an der genannten nicht rotierenden Fahrzeugkarosserie (524) in der Nähe des genannten Fahrzeugdachs (544) montiert ist, und wobei der genannte m-te Rundkraftgenerator (530) der nicht rotierenden Fahrzeugkarosserie (524) eine erste rotierende Masse (mass$_{m\_1}$) (534) beinhaltet, die steuerbar um eine erste rotierende Massenachse (534') mit einer ersten drehmassenregelbaren Rotationsunwuchtphase $\phi_{m\_1}$ angetrieben wird, und einer zweiten corotierenden Masse (mass$_{m\_2}$) (536), die steuerbar um eine zweite rotierende Massenachse (536') mit einer zweiten drehmassenregelbaren Rotationsunwuchtphase $\phi_{m\_2}$ angetrieben wird, wobei die genannte Unwuchtphase $\phi_{m\_1}$ und die genannte Unwuchtphase $\phi_{m\_2}$ in Bezug auf das genannte Drehreferenzsignal gesteuert werden, wobei der genannte m-te Rundkraftgenerator (530) der nicht rotierenden Fahrzeugkarosserie an der genannten nicht rotierenden Fahrzeugkarosserie (524) in der Nähe des genannten Fahrzeugbodens (546) montiert ist.

**12.** Fahrzeug (520), das ein System nach Anspruch 1 und eine nicht rotierende Fahrzeugkarosserie (524) mit einem rotierenden Maschinenelement (522) umfasst, wobei die genannte nicht rotierende Fahrzeugkarosserie (524) ferner Folgendes umfasst:

ein Fahrzeuggetriebe (526) zum Übertragen von Drehkraft auf das genannte rotierende Maschinenelement (522), wobei der genannte Fahrzeugvibrationssteuersystem-Controller (411) ein Drehreferenzsignal von den genannten Daten des Sensors des rotierenden Maschinenelements in Bezug auf die genannte relative Rotation des genannten rotierenden Maschinenelements (522) berechnet, das relativ zu der genannten nicht rotierenden Fahrzeugkarosserie (524) rotiert, wobei die genannte Unwuchtphase $\phi_{1\_1}$ und die genannte Unwuchtphase $\phi_{1\_2}$ in Bezug auf das genannte Drehreferenzsignal geregelt werden, wobei der genannte erste Rundkraftgenerator (530) der nicht rotierenden Fahrzeugkarosserie an dem genannten Fahrzeuggetriebe (526) montiert ist.

**13.** System nach Anspruch 1, wobei der genannte Rundkraftgenerator (530) wenigstens ein erstes rotierendes, extern eingehaustes Kühlgebläse zum Kühlen des genannten Rundkraftgenerators (530) beinhaltet.

**Revendications**

1. Système de contrôle de vibrations de véhicule (409) pour contrôler les vibrations gênantes dans une carrosserie de véhicule non rotative (524) ayant un élément de machine tournante (522), ledit système de contrôle de vibrations de véhicule (409), comprenant :

   un contrôleur de système de contrôle de vibrations de véhicule (411) ;
   un capteur d'élément de machine tournante (552), pour entrer des données d'élément de machine tournante de véhicule en corrélation avec une rotation relative dudit élément de machine tournante tournant par rapport à ladite carrosserie de véhicule non rotative (524) dans ledit contrôleur de système de contrôle de vibrations de véhicule (411),
   au moins un premier capteur de vibrations de carrosserie de véhicule non rotative (554), ledit au moins premier capteur de vibrations de carrosserie de véhicule non rotative (554) entrant au moins de premières données de capteur de vibrations de carrosserie de véhicule non rotative en corrélation avec des vibrations de véhicule dans ledit contrôleur de système de contrôle de vibrations de véhicule (411) ;
   au moins un premier générateur de force circulaire de carrosserie de véhicule non rotative (530), ledit au moins un premier générateur de force circulaire de carrosserie de véhicule non rotative (530) étant destiné à être monté de manière fixe sur ladite de carrosserie de véhicule non rotative (524) ;
   dans lequel ledit au moins premier générateur de force circulaire de carrosserie de véhicule non rotative (530) est configuré pour être commandé par ledit contrôleur de système de contrôle de vibrations de véhicule (411) pour produire une force de rotation avec une amplitude de force de rotation contrôlable et une phase de force de rotation contrôlable;
   dans lequel ledit au moins un premier générateur de force circulaire de carrosserie de véhicule non rotative (530) comprend au moins une première masse rotative ($mass_{1\_1}$) (534) entraînée de manière contrôlable autour d'un premier axe de masse rotative (534') avec une première phase de déséquilibre rotatif contrôlable de masse rotative $\varphi_{1\_1}$ et au moins une deuxième masse corotative ($mass_{1\_2}$) (536) entraînée de manière contrôlable autour d'un deuxième axe de masse rotative (536') avec une deuxième phase de déséquilibre rotatif contrôlable de masse rotative $\varphi_{1\_2}$; et
   ladite amplitude de force de rotation contrôlable est configurée pour être commandée à partir d'une amplitude de force minimale jusqu'à une amplitude de force maximale, et avec ladite phase de force de rotation contrôlable commandée en référence auxdites données de capteur d'élément de machine tournante en corrélation avec ladite rotation relative dudit élément de machine tournante de véhicule (522) tournant par rapport à ladite carrosserie de véhicule non rotative (524) avec lesdites vibrations de véhicule détectées par ledit au moins premier capteur de vibrations de carrosserie de véhicule non rotative (554) réduites par ledit contrôleur de système de contrôle de vibrations de véhicule (411);
   dans lequel le premier axe de masse rotative (534') et le deuxième axe de masse rotative (536') se chevauchent.

2. Système, tel que revendiqué dans la revendication 1, comprenant n capteurs de vibrations de carrosserie de véhicule non rotative (554) et m générateurs de force circulaire de carrosserie de véhicule non rotative (530), où n > m.

3. Système, tel que revendiqué dans la revendication 1, dans lequel ladite force de rotation est commandée pour tourner à une harmonique de la vitesse de rotation de l'élément de machine tournante (522).

4. Système, tel que revendiqué dans la revendication 1, dans lequel ledit contrôleur de système de contrôle de vibrations de véhicule (411) génère un signal de référence de rotation à partir desdites données de capteur d'élément de machine tournante de véhicule (552) en corrélation avec ladite rotation relative dudit élément de machine tournante de véhicule (522) tournant par rapport à ladite carrosserie de véhicule non rotative (524).

5. Système, tel que revendiqué dans la revendication 1, dans lequel ledit contrôleur de système de contrôle de vibrations de véhicule (411) calcule en référence à un signal de référence de rotation ladite force de rotation avec une partie réelle $\alpha$ et une partie imaginaire $\beta$.

6. Système, tel que revendiqué dans la revendication 1, comprenant n capteurs de vibrations de carrosserie de véhicule non rotative (554) et m générateurs de force circulaire de carrosserie de véhicule non rotative (530), dans lequel ledit contrôleur de système de contrôle de vibrations de véhicule (411) génère un signal de référence de rotation à partir desdites données de capteur d'élément de machine tournante de véhicule (552) en corrélation avec ladite rotation relative dudit élément de machine tournante de véhicule (522) tournant par rapport à ladite carrosserie de véhicule non rotative (524),

ladite phase de déséquilibre $\varphi_{1\_1}$ et ladite phase de déséquilibre $\varphi_{1\_2}$ étant commandées en référence audit signal de référence de rotation; et

ledit m-ième générateur de force circulaire de carrosserie de véhicule non rotative (530) comportant une première masse rotative (mass$_{m\_1}$) (534) entraînée de manière contrôlable autour d'un premier axe de masse rotative (534') avec une première phase de déséquilibre rotatif contrôlable de masse rotative $\varphi_{m\_1}$ et une deuxième masse corotative (mass$_{m\_2}$) (536) entraînée de manière contrôlable autour d'un deuxième axe de masse rotative (536') avec une deuxième phase de déséquilibre rotatif contrôlable de masse rotative $\varphi_{m\_2}$, ladite phase de déséquilibre $\varphi_{m\_1}$ et ladite phase de déséquilibre $\varphi_{m\_2}$ étant commandées en référence audit signal de référence de rotation.

7. Système, tel que revendiqué dans la revendication 1, dans lequel ladite première masse rotative (mass$_{1\_1}$) (534) est entraînée par un premier moteur (538) et ladite deuxième masse corotative (mass$_{1\_2}$) (536) est entraînée par un deuxième moteur (540).

8. Système, tel que revendiqué dans la revendication 1, avec un cliquet (576) faisant le lien entre ladite première masse rotative (mass$_{m\_1}$) (534) et ladite deuxième masse corotative (mass$_{m\_2}$) (536), et un moteur (538) pour entraîner ladite première masse rotative (mass$_{m\_1}$) (534), dans lequel ladite première masse rotative (mass$_{m\_1}$) (534) comprend une masse rotative maîtresse (mass$_{m\_1}$) avec une phase de déséquilibre rotatif contrôlable de masse rotative maîtresse $\varphi_{1\_1}$, et ladite deuxième masse corotative (mass$_{m\_2}$) (536) comprend une masse corotative esclave (mass$_{m\_2}$) avec une phase de déséquilibre rotatif contrôlable de masse rotative esclave $\varphi_{1\_2}$ avec ledit cliquet (576) commandant ladite phase de déséquilibre rotatif contrôlable de masse rotative esclave $\varphi_{1\_2}$ par rapport à ladite phase de déséquilibre rotatif contrôlable de masse rotative maîtresse $\varphi_{1\_1}$.

9. Système, tel que revendiqué dans la revendication 1, comprenant n capteurs de vibrations de carrosserie de véhicule non rotative (554) et m générateurs de force circulaire de carrosserie de véhicule non rotative (530), où m $\geq$ 2, et un deuxième générateur de force circulaire de carrosserie de véhicule non rotative (530) comprenant une première masse rotative (mass$_{2\_1}$) (534) entraînée de manière contrôlable autour d'un deuxième axe de générateur de force circulaire (530") avec une première phase de déséquilibre rotatif contrôlable de masse rotative $\varphi_{2\_1}$ et une deuxième masse corotative (mass$_{2\_2}$) entraînée de manière contrôlable autour dudit deuxième axe de générateur de force circulaire (530") avec une deuxième phase de déséquilibre rotatif contrôlable de masse rotative $\varphi_{2\_2}$, ledit deuxième générateur de force circulaire de carrosserie de véhicule non rotative (530) étant orienté par rapport audit premier générateur de force circulaire de carrosserie de véhicule non rotative (530), dans lequel ledit deuxième axe de générateur de force circulaire (530") est non parallèle avec ledit premier axe de générateur de force circulaire (530').

10. Système, tel que revendiqué dans la revendication 9, dans lequel m $\geq$ 3, et comprenant un troisième générateur de force circulaire de carrosserie de véhicule non rotative (530) comportant une première masse rotative (mass$_{3\_1}$) (534) entraînée de manière contrôlable autour d'un troisième axe de générateur de force circulaire (530''') avec une première phase de déséquilibre rotatif contrôlable de masse rotative $\varphi_{3\_1}$ et une deuxième masse corotative (mass$_{3\_2}$) (536) entraînée de manière contrôlable autour dudit troisième axe de générateur de force circulaire (530''') avec une deuxième phase de déséquilibre rotatif contrôlable de masse rotative $\varphi_{3\_2}$, ledit troisième axe de générateur de force circulaire (530''') étant orienté par rapport audit deuxième axe de générateur de force circulaire (530") et audit premier axe de générateur de force circulaire (530').

11. Véhicule (520) comprenant un système, tel que revendiqué dans la revendication 1, et une carrosserie de véhicule non rotative (524) ayant un élément de machine tournante (522), dans lequel ladite carrosserie de véhicule non rotative (524) comprend en outre :

un plafond de véhicule (544) et un plancher de véhicule distal (546), ledit plancher de véhicule distal (546) étant situé sous ledit plafond de véhicule (544), comprenant n capteurs de vibrations de carrosserie de véhicule non rotative (554) et m générateurs de force circulaire de carrosserie de véhicule non rotative (530), ledit contrôleur de système de contrôle de vibrations de véhicule (411) calcule un signal de référence de rotation à partir desdites données de capteur d'élément de machine tournante en corrélation avec ladite rotation relative dudit élément de machine tournante (522) tournant par rapport à ladite carrosserie de véhicule non rotative (524), ladite phase de déséquilibre $\varphi_{1\_1}$ et ladite phase de déséquilibre $\varphi_{1\_2}$ étant commandées en référence audit signal de référence de rotation, ledit premier générateur de force circulaire de carrosserie de véhicule non rotative (530) étant monté sur ladite carrosserie de véhicule non rotative (524) à proximité dudit plafond de véhicule (544), et ledit m-ième générateur de force circulaire (530) de carrosserie de véhicule non rotative (524) comportant une première masse rotative (mass$_{m\_1}$) (534) entraînée de manière contrôlable autour d'un premier axe de masse rotative (534') avec une première phase de déséquilibre rotatif contrôlable de masse rotative $\varphi_{m\_1}$ et une deuxième masse corotative (mass$_{m\_2}$) (536) entraînée de manière contrôlable autour d'un deuxième axe de masse rotative (536') avec une deuxième phase de déséquilibre rotatif contrôlable de masse rotative $\varphi_{m\_2}$, ladite phase de déséquilibre $\varphi_{m\_1}$ et ladite phase de déséquilibre $\varphi_{m\_2}$ étant commandées en référence audit signal de référence de rotation, ledit m-ième générateur de force circulaire de carrosserie de véhicule non rotative (530) étant monté sur ladite carrosserie de véhicule non rotative (524) à proximité dudit plancher de véhicule (546).

12. Véhicule (520) comprenant un système, tel que revendiqué dans la revendication 1, et une carrosserie de véhicule non rotative (524) ayant un élément de machine tournante (522), dans lequel ladite carrosserie de véhicule non rotative (524) comprend en outre :

une transmission de véhicule (526) pour transmettre une puissance de rotation audit élément de machine tournante (522),
ledit contrôleur de système de contrôle de vibrations de véhicule (411) calcule un signal de référence de rotation à partir desdites données de capteur d'élément de machine tournante en corrélation avec ladite rotation relative dudit élément de machine tournante (522) tournant par rapport à ladite carrosserie de véhicule non rotative (524), ladite phase de déséquilibre $\varphi_{1\_1}$ et ladite phase de déséquilibre $\varphi_{1\_2}$ étant commandées en référence audit signal de référence de rotation, ledit premier générateur de force circulaire de carrosserie de véhicule non rotative (530) étant monté sur ladite transmission de véhicule (526).

13. Système, tel que revendiqué dans la revendication 1, dans lequel ledit générateur de force circulaire (530) comprend au moins un premier ventilateur de refroidissement rotatif logé à l'extérieur pour refroidir ledit générateur de force circulaire (530).

FIG. 1A

FIG. 1B

411

COMM TO PC

115 VAC 3$_\Phi$, 400Hz

28 VDC

SYSTEM
CONTROLLER

COM BUS

TACH_in

552

DRIVE

E-MODULE

SENSORS

CFG

530

DRIVE

E-MODULE

SENSORS

CFG

530

DRIVE

E-MODULE

SENSORS

CFG

530

554

ACCELEROMETERS (UP TO 16)

COM. BUS PREFERABLY USES CANbus
CFG (CIRCLAR FORCE GENERATOR) PRODUCES ROTATING FORCE WITH CONTROLLED
ROTATING FORCE MAGNITUDE AND CONTROLLED ROTATING FORCE PHASE

FIG. 2

EP 2 985 222 B1

ZERO FORCE

FULL FORCE

FIG. 3

EP 2 985 222 B1

FIG. 4

EP 2 985 222 B1

530

FIG. 5A

530

FIG. 5B

FIG. 5C

FIG. 5D

530'

530

EP 2 985 222 B1

FIG. 5E

530

CONNECTOR
TO SYSTEM

550

542

542

540

548

548

530', 530", 530''', 530''''

556

556

530', 530", 530''', 530''''

538

534

536

542

550

542

530

FIG. 5F

FIG. 5G

530', 530", 530'''

538

556

540

536

550

538

530

530'

EP 2 985 222 B1

FIG. 6A

FIG. 6B

530'''

530'

530''

530'''

530''

530'

FIG. 6C

FIG. 6D

FIG. 6E

FIG. 6F

INSTRUMENTATION - CONTROL SENSORS 554

ROOF

FLOOR

SIDEWALL

FRAME 3 / FRAME 4 / FRAME 5 / FRAME 7

PILOT / COPILOT

TAIL

NOSE

16 CONTROL ACCELEROMETERS SENSORS 564 USED
(VARIOUS LOCATIONS ON FLOOR AND SIDEWALL)

FIG. 7A

VERTICLE FRAME 7 TAILCONE

FIG. 7B

EP 2 985 222 B1

FIG. 7C

CIRCULAR FORCE GENERATOR

530

530

530

FRAME 5 SIDE BY SIDE UNDER FLOOR

FRAME 7 SIDE BY SIDE

NOSE SIDE BY SIDE UNDER FLOOR

POWER INPUT (VAC 115, 3-PHASE)

WIRE HARNESS KIT

POWER INPUT (VAC 115, 3 PHASE)

CFG MOTOR DRIVE INPUT
CFG SENSORS (ETHERNET)
CFG HALL SPEED
CFG MOTOR DRIVE INPUT
CFG SENSORS (ETHERNET)
CFG HALL SPEED

CFG MOTOR DRIVE INPUT
CFG SENSORS (ETHERNET)
CFG WALL SPEED
CFG MOTOR DRIVE INPUT
CFG SENSORS (ETHERNET)
CFG HALL SPEED

RS-232
8 INPUTS
RELAY OUTPUTS
RELAY OUTPUTS
8 INPUTS
RS-232

CFG MOTOR DRIVE INPUT
CFG SENSORS (ETHERNET)
CFG HALL SPEED
CFG MOTOR DRIVE INPUT
CFG SENSORS (ETHERNET)
CFG HALL SPEED

2 FG CONTROLLER    J5
ALT FG CONTROLLER    J5
TAIL CONE INSTALLATION

COMM BUS 3   COMM BUS 1

1 FG CONTROLLER    J5
FORMAT FG CONTROLLER    J5
NOSE INSTALLATION UNDER FLOOR

LT
16
M

411

ACCEL INPUTS (16-CHANNELS)

ACCELEROMETERS

554

ARINC 429 TX (1)/RX (1)
ENGINE 1 TACH
ENGINE 2 TACH
ARINC 429 TX (1)/RX (1)

552

411

ACCEL INPUTS (16-CHANNELS)

554

9. FR 4 RT FLOOR Z
10. FR 4 RT FLOOR X
11. FR 4 RT FLOOR Y
12. FR 4 LT SIDEWALL Y
13. FR 5 RT FLOOR Y
14. FR 5 RT FLOOR Z
15. FR 5 LT FLOOR Z
16. FR 5 LT SIDEWALL Z

1. PILOT FEET X
2. PILOT FEET Y
3. PILOT FEET Z
4. CO-PILOT FEET X
5. CO-PILOT FEET Y
6. CO-PILOT FEET Z
7. FR 3 LI SIDEWALL Z
8. FR 3 RT SIDEWALL Y

SHEAR MOUNT

FIG. 7D

BASE MOUNT

FIG. 7E

AVC WITH CIRCULAR FORCE GENERATORS (CFGs) ON HELICOPTER TRANSMISSIONS

FIG. 8

. . . OR COMBINATIONS THERE OF

EP 2 985 222 B1

FIG. 9

FIG. 10

POWER INPUT
(115 VAC, 3-PHASE)

554

411

524

J5   ICU   J4

J3

ACCEL
INPUTS

552

ENGINE 1 TACH

ARINC 429 TX (1)/RX (1)

RS-232

2 RELAY OUTPUTS

3 DESCRETES INPUTS

524

554

409

530

530

530

530

530

530

EP 2 985 222 B1

52

FIG. 11A

FIG. 11B

FIG. 11C

MOTOR
BEARINGS

574 574 571 571' 573

572

MOTOR
WINDING
571

572

573 SLAVE ROTATING MASS
    IMBALANCE ROTOR (536)

575 BEARING

576 DETENT

574 MASTER ROTATING MASS
    IMBALANCE ROTOR (534)

530'

571' MOTOR ROTOR
DRIVEN BY MOTOR WINDINGS AND
SUPPORTED BY BEARINGS 572

FIG. 11D

EP 2 985 222 B1

FIG. 11E

571"

571'

575

576

573

576

**FIG. 11G**

576

**FIG. 11F**

A

A

572    575

MASTER
IMBALANCE
WEIGHT

574    574

SLAVE
IMBALANCE
WEIGHT

571'    576    576

SCALLOPED
ALUMINUM

ELASTOMERIC
TUBE FORM
COMPLIANCE
MEMBER

576'    575

ROTOR

STATOR

571"

FIG. 12A

572    575

IMBALANCE
WEIGHT

576 ——                    —— 576

576' ——                  SCALLOPED
ALUMINUM

576' ——                  —— 575

ROTOR

STATOR

——571"

FIG. 12B

FIG. 12C

INNER DETENTS

OUTER DETENTS

RETART THE
MOTOR THIS
MUCH TO STEP
BACK

ADVANCE MOTOR
THIS MUCH TO
STEP FORWARD

EP 2 985 222 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2275984 A
- WO 2009055007 A2
- US 20070156289 A1